# EUROPÄISCHE PATENTSCHRIFT

(11) **EP 1 944 600 B1**
(45) Veröffentlichungstag und Bekanntmachung des Hinweises auf die Patenterteilung: **27.01.2016**
(21) Anmeldenummer: 08007103.8
(22) Anmeldetag: 21.07.2006
(51) Int. Cl.: G01N 21/64, G02B 21/00

(54) **Laser-Scanning-Mikroskop**
Laser scanning microscope
Microscope à balayage laser

(30) Priorität: 22.07.2005 DE 102005034443; 18.04.2006 DE 102006017841
(43) Veröffentlichungstag der Anmeldung: 16.07.2008
(62) Teilanmeldung aus: 06762757.0
(73) Patentinhaber: Carl Zeiss Microscopy GmbH, 07745 Jena (DE); Carl-Zeiss Jena GmbH, 07745 Jena (DE)
(72) Erfinder: Wolleschensky, Ralf, 07743 Jena (DE); Kempe, Michael, 07751 Jena (DE)
(74) Vertreter: Patentanwälte Geyer, Fehners & Partner mbB

(56) Entgegenhaltungen:
- DE-A1- 10 257 237
- US-B1- 6 441 379

## Beschreibung

Die Erfindung bezieht sich auf ein Laser-Scanning-Mikroskop mit einer Beleuchtungsstrahlquelle und einem Detektionsstrahlengang, der in einer Probe angeregte und/oder rückgestreute Strahlung längs einer optischen Achse zu einer Detektoreinrichtung leitet und in dem ein Strahlteiler vorgesehen ist, über den von der Beleuchtungsstrahlquelle abgegebene Beleuchtungsstrahlung in einem Beleuchtungsstrahlengang auf die Probe gerichtet ist, wobei der Strahlteiler an der Probe spiegelnd reflektierte Beleuchtungsstrahlung nicht zur Detektoreinrichtung passieren läßt und dazu in einer Pupille des Beleuchtungsstrahlenganges angeordnet sowie teilverspiegelt ist. Ein solches Mikroskop ist aus der DE 102 57237 A1 bekannt.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung beleuchtet und das dadurch angeregte Lumineszenzlicht mit geeigneten Detektoren erfaßt. Üblicherweise ist dazu im Lichtmikroskop ein dichroitischer Strahlteiler in Kombination mit Blockfiltern vorgesehen, die die Fluoreszenzstrahlung von der Anregungsstrahlung abspalten und eine getrennte Beobachtung ermöglichen. Durch dieses Vorgehen ist die Darstellung einzelner, verschieden gefärbter Zellteile im Lichtmikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfaßt also beide Prozesse.

Weiter ist es zur Probenuntersuchung bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene wiedergeben, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend, mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

Prinzipiell ist die optische Auflösung eines Lichtmikroskopes, auch eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nicht-linearer Entvölkerungsprozesse kann weiter die Auflösung auf einen Faktor von bis zu 10 gegenüber einem beugungsbegrenzten konfokalen LSM angehoben werden.

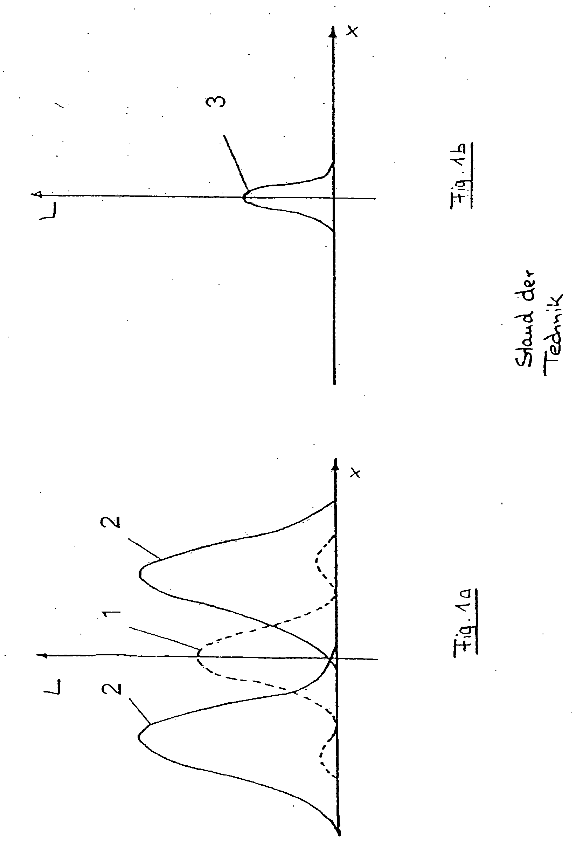

Die Fig. 1a/b zeigen ein solches Verfahren, wie es z.B. in US 5866911 beschrieben ist. Dabei wird zur Auflösungssteigerung mit einer zwei Wellenlängen aufweisenden Lichtstrahlung gearbeitet. Die Lichtstrahlung der einen Wellenlänge wird als Anregungslichtstrahl 1 auf die zu messende Probe mittels eines Objektives fokussiert und regt dort Lumineszenz, hier Fluoreszenz, an. Die Darstellung in den Fig. 1a/b zeigt zur Vereinfachung nur den eindimensionalen Fall. Die Erhöhung der Ortsauflösung erfolgt nun dadurch, daß ein Lichtstrahl 2 mit der anderen Wellenlänge in Teilbereichen den durch den Anregungslichtstrahl angeregten fluoreszierenden Zustand entvölkert. Man bezeichnet diesen Lichtstrahl deshalb auch als "Entvölkerungs-Strahlung". Nun erfolgt die Einstrahlung z.B. so, daß sich das Hauptmaximum des Entvölkerungs-Lichtstrahls 2 und das Hauptmaximum des Anregungslichtstrahls 1 teilweise überdecken, wie es in Fig. 1a gut zu erkennen ist. Durch diese "Abregung" der Probe an den Rändern des mit Anregungsstrahlung 1 beleuchteten Bereiches, sendet nur noch ein reduziertes Volumen 3 Fluoreszenz aus, wie in Fig. 1b gut zu sehen ist. Die Auflösung ist durch diese Volumenreduktion folglich gesteigert.

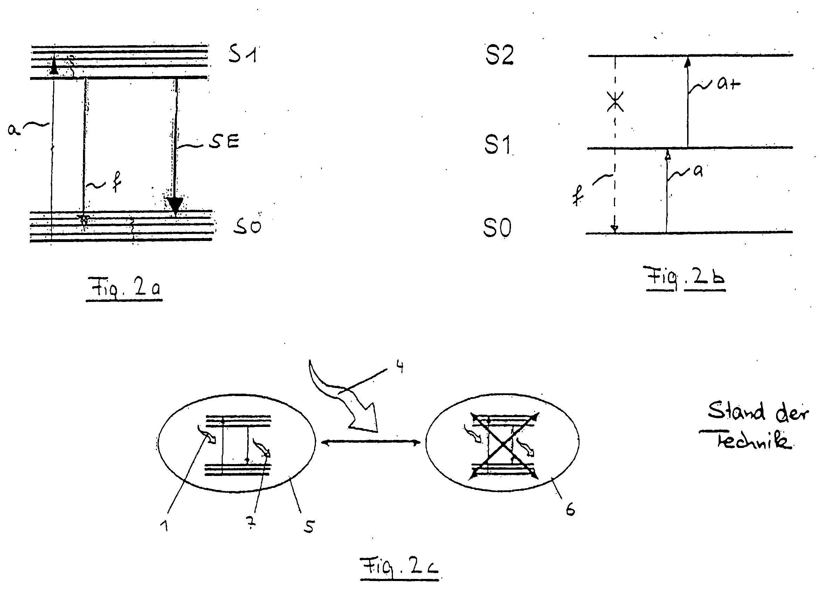

Fig. 2a-c zeigen drei mögliche Mechanismen, mit denen eine solche Entvölkerung erfolgen kann. In Fig. 2a ist der Prozeß der Abregung durch stimulierte Emission (STED) dargestellt. Die Anregungsstrahlung liegt im Fluorophor des Niveaus S1 an (Pfeil A). Die Entvölkerung des derart angeregten Niveaus S1 wird in Richtung des Grundniveaus S0 durch Lichtstrahlung mit einer Wellenlänge im Bereich der Fluoreszenzwellenlänge bewerkstelligt. Pfeil SE zeigt diese stimulierte Emission, deren Wellenlänge der der Lumineszenz (Pfeil F) fast identisch entspricht. Somit ist die Anregungswellenlänge um den Betrag des Stokesshiftes kurzwelliger als die der Entvölkerungs-Strahlung. Die Auflösungssteigerung gemäß dieses Ansatzes benötigt also zwei unterschiedliche Lichtquellen, wie auch der Stand der Technik in Form der DE 4416558 C2 belegt.

Fig. 2b veranschaulicht einen weiteren möglichen Prozeß der Entvölkerung für das angeregte Niveau S1 (Pfeil A), indem eine Anregung in ein noch höheres Niveau S2 (Pfeil A+) erfolgt, das keine Lumineszenz mehr aussenden kann. Dieses Anheben wird im Englischen als Excited State Absorption bezeichnet, weshalb dieses Vorgehen auch mit dem Kürzel ESA belegt ist. Eine entsprechende Schilderung dieses Prozesses findet sich beispielsweise in der US 6633432. Da der Abstand der Energieniveaus in einer Probe bzw. einem Farbstoff zu höheren Niveaus hin abnimmt, verwendet man zur Entvölkerung bei dem ESA-Prozeß eine Lichtquelle mit einer geringeren Energie und damit längeren Wellenlänge, als zur Anregung. Man braucht also wiederum zwei verschiedene Lichtquellen.

Ein weiteres Verfahren zur Entvölkerung stellt für die Fluoreszenz die sogenannte Reversible Saturable Optical Fluorescence Transition dar, die z.B. in DE 10325460 A1 beschrieben und in Fig. 2c veranschaulicht ist. Dieser Ansatz verwendet zum räumlich hochauflösenden Abbilden einen Farbstoff, der mit Hilfe eines Umschaltstrahls 4 wiederholt aus einem ersten Zustand 5, in dem Fluoreszenz stattfindet, in einen zweiten Zustand 6, in dem der Farbstoff nicht fluoresziert, überführbar ist, wobei der Farbstoff aus dem zweiten Zustand 6 in den ersten Zustand 5 zurückkehren kann, wie Fig. 2c veranschaulicht. Die Probe mit dem Farbstoff wird in Teilbereichen mit dem Umschaltstrahl 4 in den zweiten Zustand 6 überführt, wobei ein definierter Bereich der Probe ausgelassen wird. Mit einem Anregungsstrahl 1 wird dann Fluoreszenzlicht 7 angeregt und anschließend registriert. Das Fluoreszenzlicht 7 stammt dann nur aus Probenvolumina, die zuvor nicht mit dem Umschaltstrahl 7 beaufschlagt wurden. Durch geeignete Überlappung von Anregungsstrahl 1 und Umschaltstrahl 4 ist das Volumen, aus dem Fluoreszenzlicht 7 emittiert wird, kleiner, als es die Auflösung des Anregungsstrahls 1 und die Schärfe der Nullstelle des Umschaltstrahls 4 a priori erlaubten.

In allen drei genannten Verfahren gemäß Fig. 2a bis 2c erfolgt also die Verhinderung von Fluoreszenz durch den Einsatz von Lichtstrahlung mit einer Wellenlänge, die ungleich der Wellenlänge zur Anregung ist. Zugleich muß diese Lichtstrahlung mindestens eine scharf begrenzte örtliche Nullstelle der Strahlungsleistung aufweisen, die die endgültige Auflösung der detektierten Fluoreszenzstrahlung bestimmt. Sobald die Nullstelle nur mehr als Minimum ausgebildet ist und nicht völlig auf Null zurückgeht, verringert sich weiter die Fluoreszenzleistung und damit die Effizienz des Verfahrens. Dies liegt z.B. bei Aberrationen der optischen Anordnung bzw. im Präparat vor.

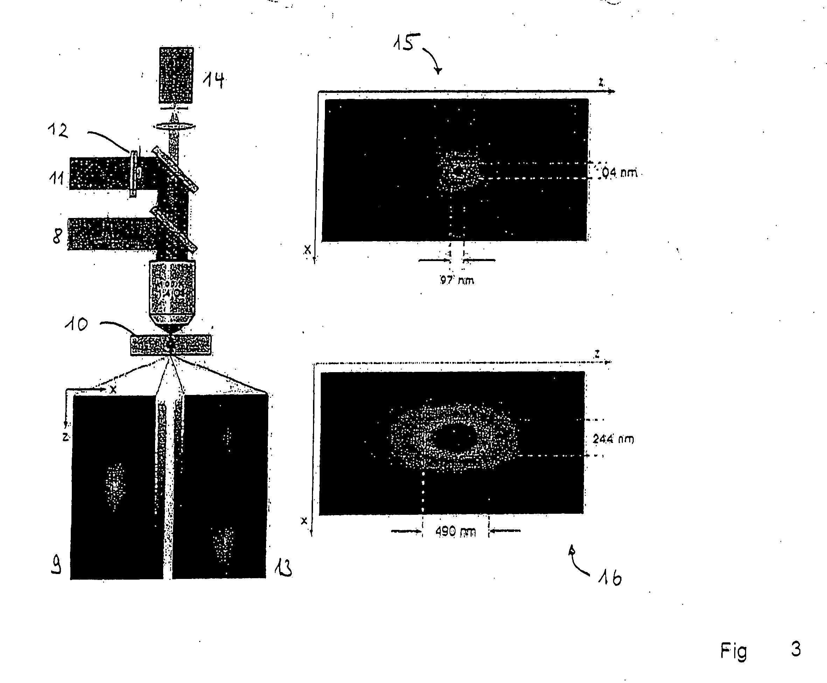

Fig. 3 zeigt eine bekannte Vorrichtung, die eines der drei genannten Verfahren zur Auflösungssteigerung verwendet, im Beispiel der Fig. 3 den STED-Prozeß. Eine Anregungsstrahlquelle 8 erzeugt eine Airy-Verteilung in der Probe 10, mit der die Probe aus dem Grundniveau S0 in den angeregten Zustand S1 überführt wird. Die Entvölkerung des Zustands S1 erfolgt mittels einer Entvölkerungslichtquelle 11, die unter die Verwendung einer Phasenplatte 12 eine donut- oder torus-förmigen Strahlverteilung 13 in der Probe 10 hat. Die Lumineszenzstrahlung der nicht-entvölkerten d.h. nicht-abgeregten Farbstoffmoleküle wird mit Hilfe eines Detektors 14 erfaßt. Durch die Entvölkerung wird die Auflösung des Mikroskops über die Beugungsbegrenzung, die sich aus der Airy-Verteilung ergibt, hinaus gesteigert. Dies kommt durch eine verkleinerte Punktverwaschungsverteilung 15 des hochauflösenden Mikroskops im Vergleich zum konventionellen Mikroskop 16 zum Ausdruck.

Ein weiteres Verfahren zur Auflösungssteigerung wird in der EP 1157297 B1 angesprochen. Dabei sollen mittels strukturierter Beleuchtung nichtlineare Prozesse ausgenützt werden. Als Nichtlinearität erwähnt die Druckschrift dabei die Sättigung der Fluoreszenz. Das geschilderte Verfahren nimmt in Anspruch, durch eine strukturierte Beleuchtung eine Verschiebung des Objektraumspektrums relativ zur Übertragungsfunktion des optischen Systems zu realisieren. Konkret bedeutet die Verschiebung des Spektrums, daß Objektraumfrequenzen V0 bei einer Raumfrequenz V0 - Vm, wobei Vm die Frequenz der strukturierten Beleuchtung ist, übertragen werden. Bei gegebener durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild.

Für Laser-Scanning-Mikroskope, die, wie beispielsweise in der DE 19702753A1 beschrieben ist, eine Probe durch Abrastern einer konfokalen Abbildung erfassen, ist die Untersuchung biologischer Präparate mittels Fluoreszenzmikroskopie deshalb eine verbreitete Anwendung. Dabei wird in einer Probe Fluoreszenz angeregt, wodurch gegenüber der Anregungsstrahlung spektral Stokes-verschobene Fluoreszenzstrahlung entsteht, die dann mit dem Laser-Scanning-Mikroskop konfokal detektiert wird. Anstelle einer konfokalen Detektion kann auch eine Weitfelddetektion erfolgen, beispielsweise im Falle einer Multi-Photonen-Anregung.

Grundsätzlich stellt sich bei einem Laser-Scanning-Mikroskop die Aufgabe, daß die Beleuchtungsstrahlung, die im erwähnten Fall der Fluoreszenzmikroskopie Anregungsstrahlung ist, von der zu detektierenden Strahlung getrennt werden muß, da zumeist die Beleuchtungsstrahlung und die Detektionsstrahlung über ein gemeinsames Objektiv geführt werden, d.h. die Beleuchtungsstrahlung fällt über das Objektiv ein, mit dem auch die Detektionsstrahlung zum Detektor geleitet wird. Es ist deshalb üblich, die Beleuchtungsstrahlung über einen Strahlteiler einzukoppeln, der dafür sorgt, daß an der Probe rückreflektierte Beleuchtungsstrahlung nicht oder zu einem möglichst geringen Anteil zum Detektor passiert.

In der Fluoreszenzmikroskopie macht man sich die Stokes-bedingte Wellenlängenverschiebung zwischen Detektions- und Anregungsstrahlung zunutze und verwendet für den Strahlteiler geeignete dichroitische Elemente, weshalb sich für den Strahlteiler auch der Begriff Farbteiler oder Hauptfarbteiler eingebürgert hat. Unterscheiden sich Beleuchtungs- und Detektionsstrahlung jedoch spektral nicht, hilft dieser Ansatz nicht weiter. Auch ist die Trennschärfe eines dichroitischen Strahlteilers begrenzt, was entweder dazu führt, daß im Detektionsstrahlengang nach dem Strahlteiler immer-noch an der Probe rückreflektierte Anregungsstrahlung verbleibt oder daß die Detektionsstrahlung beim Durchgang durch den Strahlteiler unnötig abgeschwächt wird.

Einen spektral unabhängigen Ansatz stellt die bereits genannte DE 10257237A1 vor. Das dort beschriebene Laser-Scanning-Mikroskop der eingangs genannten Art verwendet die Tatsache, daß von der Probe kommende Strahlung in der Regel inkohärent, d.h. nicht gerichtet an der Probe emittiert wird, wohingegen spiegelnd reflektierte Anregungs- oder Beleuchtungsstrahlung gerichtet in den Detektionsstrahlengang einkoppelt. Die DE 10257237A1 schlägt deshalb vor, in eine Pupille des Beleuchtungsstrahlengangs einen Strahlteiler einzufügen, der am Durchstoßpunkt der optischen Achse transparent und ansonsten verspiegelt ist. Zugleich wird die Beleuchtungsstrahlung genau auf diesen transparenten Fleck fokussiert. Im Ergebnis erhält man damit eine flächige Beleuchtung der Probe und zugleich gelangt an der Probe spiegelnd reflektierte Beleuchtungsstrahlung wieder auf die Spiegelfläche des Strahlteilers und wird dadurch aus dem nachfolgenden Teil des Detektionsstrahlengangs aufgespiegelt. Die diffus in der Probe erzeugte Detektionsstrahlung hingegen wird nicht fokussiert, füllt die ganze Pupille und wird fast vollständig transmittiert. Der als Auskoppelgrad der Beleuchtungsstrahlung zu verstehende Wirkungsgrad dieses Strahlteilers ist also nur durch das Flächenverhältnis von Pupille zu transparentem Fleck gegeben. Er kann bei geeigneter Fokussierung der Beleuchtungsstrahlung weit über 90% liegen. Der derart durch die DE 10257237A1 erreichte Strahlteiler ist spektral unempfindlich und erlaubt eine hohe Ausbeute der Detektionsstrahlung.

Die Laser-Scanning-Mikroskopie eignet sich, wie bereits erwähnt, besonders zur Untersuchung biologischer Proben. Die Zeitdauer, die für die Aufnahme eines Bildes benötigt wird, ist bei biologischen Proben naturgemäß ein bedeutender Faktor, insbesondere wenn man lebende Proben untersuchen oder schnell ablaufende Vorgänge analysieren möchte. Es ist deshalb stetes Bestreben in der Laser-Scanning-Mikroskopie, die Bildaufnahmegeschwindigkeit zu steigern. Hierzu sind in letzter Zeit vermehrt Mikroskopsysteme beschrieben worden, die eine Probe nicht mit einem punkt-artigen Lichtfleck (d.h. mit nicht einem konfokalen Punkt-Scanner) abtasten, sondern mit einer zeilenförmigen Beleuchtung und Abtastung (d.h. eine konfokale Schlitzblende) verwenden. Auch hierfür stellt die DE 10257237A1 einen geeigneten Strahlteiler bereit, bei dem dann ein zeilenförmiger Bereich in Form eines schmalen Rechteckes auf dem Strahlteiler verspiegelt ist. Einen Strahlteiler für einen optischen Scanner offenbart die US 6 441 379 B1.

Zwar erreichen zeilen-scannende Systeme eine hohe Bildaufnahmegeschwindigkeit, jedoch ist die Tiefenschärfeauflösung gegenüber einem punkt-scannenden System vermindert, da es in der konfokalen Abbildung mit der Schlitzblende prinzipbedingt zu einem gewissen Übersprechen längs der Schlitzblendenrichtung kommt.

Der Erfindung liegt deshalb die Aufgabe zugrunde, ein Laser-Scanning-Mikroskop der eingangs genannten Art so weiterzubilden, daß eine schnelle Bildaufnahme möglich ist, ohne die mit einer Schlitzblende einhergehende Tiefenauflösungseinschränkung.

Die Aufgabe wird gemäß Anspruch 1 mit einem Laser-Scanning-Mikroskop mit einer Beleuchtungsstrahlquelle und einem Detektionsstrahlengang, der in einer Probe angeregte und/oder rückgestreute Strahlung längs einer optischen Achse zu einer Detektoreinrichtung leitet und in dem ein Strahlteiler vorgesehen ist, über den von der Beleuchtungsstrahlquelle abgegebene Beleuchtungsstrahlung in einem Beleuchtungsstrahlengang auf die Probe gerichtet ist, wobei der Strahlteiler an der Probe spiegelnd reflektierte Beleuchtungsstrahlung nicht zur Detektoreinrichtung passieren läßt und dazu in einer Pupille des Beleuchtungsstrahlenganges angeordnet sowie teilverspiegelt ist, gelöst, bei dem der Strahlteiler eine im Detektionsstrahlengang liegende Strahlteilerfläche aufweist, die an drei Punkten verspiegelt ist, welche auf der Strahlteilerfläche auf einen Kreis um den Durchstoßpunkt der optischen Achse liegen, und bei dem die Beleuchtungsstrahlquelle eine der Punktzahl entsprechende Anzahl an Teilstrahlen erzeugt und diese auf die Punkte des Strahlteilers derart fokussiert, daß in der Probe ein Interferenzmuster in Form periodisch über die Probe verteilter Beleuchtungsflecke entsteht.

Die erfindungsgemäße Lösung läßt sich natürlich gemäß Anspruch 2 auch invertieren, indem der Strahlteiler die Detektionsstrahlung ausspiegelt und spiegelnd reflektierte Beleuchtungsstrahlung passieren läßt. Dazu ist vorgesehen, ein Laser-Scanning-Mikroskop mit einer Beleuchtungsstrahlquelle und einem Detektionsstrahlengang, der in einer Probe angeregte und/oder rückgestreute Strahlung längs einer optischen Achse zu einer Detektoreinrichtung leitet und in dem ein Strahlteiler vorgesehen ist, über den von der Beleuchtungsstrahlquelle abgegebene Beleuchtungsstrahlung in einem Beleuchtungsstrahlengang auf die Probe gerichtet ist, wobei der Strahlteiler an der Probe spiegelnd reflektierte Beleuchtungsstrahlung nicht zur Detektoreinrichtung passieren läßt und dazu in einer Pupille des Beleuchtungsstrahlenganges angeordnet sowie teilverspiegelt ist, wobei der Strahlteiler eine im Detektionsstrahlengang liegende reflektierende Strahlteilerfläche aufweist, die zumindest an drei Punkten für die Beleuchtungsstrahlung nicht verspiegelt ist, welche auf der Strahlteilerfläche auf einem Kreis um den Durchstoßpunkt der optischen Achse liegen, und die Beleuchtungsstrahlquelle eine der Punktzahl entsprechende Anzahl von Teilstrahlen erzeugt und diese auf die drei Punkte des Strahlteilers derart fokussiert, daß in der Probe ein Interferenzmuster in Form periodisch über die Probe verteilter Beleuchtungsflecke entsteht.

Die Erfindung erzielt eine hocheffiziente Punktgruppenerzeugung mittels eines einfachen Aufbaus.

Erfindungsgemäß wird der Strahlteiler so ausgebildet, daß die Probe mit einer Punktgruppe in Form eines durch Interferenz erzeugten Musters beleuchtet wird. Dies erlaubt eine parallele Beleuchtung mehrerer Punkte und auch ein paralleles Abtasten dieser gleichzeitig beleuchteten Punkte, wenn die Detektoreinrichtung eine Multipunktdetektion an den beleuchteten Flecken vornimmt. Im Ergebnis erhält man gegenüber einer Einzelpunktbeleuchtung eine um die Punktanzahl vervielfachte Abtastgeschwindigkeit, ohne daß die Tiefenauflösung beeinträchtigt wäre. Die Beleuchtung (in der Fluoreszenzmikroskopie, Anregung) der Probe mit dem regelmäßigen Punktgruppenmuster erfolgt erfindungsgemäß unter Ausnutzung eines Interferenzeffektes, so daß die Anzahl an Beleuchtungsstrahlen, welche die Beleuchtungsquelle bereitstellt, sehr viel geringer ist, als die Anzahlen an Beleuchtungsflecken im regelmäßigen Muster. Der Interferenzeffekt benötigt lediglich mindestens drei reflektierende Punkte / transmittierende Löcher am Strahlteiler, auf die die Beleuchtungsstrahlung fokussiert wird, so daß man mindestens drei Beleuchtungsstrahlen am Strahlteiler einkoppelt. Diese Anzahl an Beleuchtungsstrahlen (in dieser Beschreibung wird der Begriff "Strahl" synonym für ein entsprechendes Strahlbündel verwendet) läßt sich einfach erzeugen. Z.B. werden bei einem Ausgangsstrahl lediglich zwei Teilerelemente benötigt. Es ist deshalb bevorzugt, daß die Beleuchtungsstrahlquelle einen Laser, der einen Laserstrahl abgibt, und eine Teilereinrichtung, die den Laserstrahl in die mindestens drei Teilstrahlen aufteilt und mittels einer Optikeinrichtung auf die Punkte / Löcher fokussiert, aufweist.

Die Anzahl an reflektierenden bzw. transmittierenden Punkten ist nicht auf drei begrenzt. Es können auch mehr Punkte verwendet werden, die auf dem Kreis symmetrisch bzw. entlang der Kreislinie möglichst gleich verteilt oder äquidistant liegen sollten, aber disjunkt sein müssen. Bei vier Punkten können diese z.B. an den Ecken eines Quadrates liegen, in dessen Zentrum sich der Durchstoßpunkt befindet.

Das erfindungsgemäße Mikroskop mit dem die Beleuchtung unter Ausnutzung der Interferenz bewirkenden Strahlteiler erzielt, wie bereits erwähnt, eine hohe Scangeschwindigkeit durch Parallelisierung der Beleuchtung und gegebenenfalls Detektion. Zugleich können in einer vorteilhaften Ausgestaltung die Anforderungen an den zum Scannen erforderlichen Scanmechanismus drastisch reduziert werden, da es zum Abrastern der Bildfläche nur noch erforderlich ist, eine Verschiebung innerhalb einer Periode des periodischen Punktgruppenmusters auszuführen. Die Scaneinrichtung muß also, wenn sie beispielsweise als optischer im Strahlengang wirkender Scanner ausgebildet ist, nur noch einen vergleichsweise geringen Ablenkwinkel erreichen. Dies kommt der Scangeschwindigkeit wie apparativen Vereinfachungen gleichermaßen entgegen. Es ist deshalb in einer Weiterbildung zu bevorzugen, daß in Beleuchtungsrichtung dem Strahlteiler nachgeordnet eine Scaneinrichtung vorgesehen ist, die eine Verschiebung des Punkgruppenmusters über der Probe innerhalb einer Periode des Punktgruppenmusters bewirkt. Neben einer strahlablenkend arbeitenden Scaneinrichtung kann dabei natürlich auch eine Bewegung der Probe, z. B. durch einen sogenannten Tischscanner, verwendet werden.

Die interferenzbedingte Erzeugung des Beleuchtungs-Punktgruppenmusters erlaubt es, die Helligkeit der Lichtflecke gegenüber den die Lichtflecke umgebenden Dunkelbereichen einfach zu verstellen, indem nämlich die Intensität jeweils diagonal gegenüberliegend fokussierter Teilstrahlen variiert wird. Es sind deshalb in der Erfindung geeignete Mittel zur Variation vorgesehen, die dem Strahlteiler in Beleuchtungsrichtung vorgeordnet sind, und beispielsweise in Form einstellbarer Abschwächelemente ausgebildet sind.

Die Anzahl an hellen Flecken im Punktgruppenmuster hängt ausschließlich von dem ausgeleuchteten Bereich auf der Probe ab, wenn im Beleuchtungsstrahlengang im wesentlichen eine Abbildung der Pupille, in welcher der Strahlteiler angeordnet ist, auf die Probe erfolgt. Der beleuchtete Bereich der Probe und damit die Anzahl an Probenpunkten läßt sich dann einfach durch Mittel zur Brennweitenvariation der Abbildung zwischen Strahlteiler und Probe bewirken. Mit anderen Worten, Mittel zur Veränderung der von der optischen Abbildung erfaßten Bildfeldgröße variieren automatisch auch die Anzahl an Beleuchtungspunkten, die auf der Probe durch die Interferenz entstehen.

Eine parallele Detektion der gleichzeitig beleuchteten Flecken auf der Probe erhöht, wie bereits erwähnt, die Bildaufnahmegeschwindigkeit. Besonders einfach kann eine solche parallele Abtastung erreicht werden, wenn der Detektionsstrahlengang in einem Matrixdetektor endet, dem optional noch eine auf das Beleuchtungsmuster abgestimmte Pinholemaske vorgeordnet werden kann. Natürlich können aber auch die ortsauflösenden Elemente des Matrixdetektors die Funktion der Pinholemaske übernehmen.

Die reflektierenden Elemente des Strahlteilers müssen nur für Beleuchtungsstrahlung reflektieren, nicht für Detektionsstrahlung. Der Strahlteiler kann also auch dichroitisch ausgebildet werden.

Der Punktabstand im Punktgruppenmuster kann über den Abstand der Foki auf den Strahlteiler, also über den Kreisradius, verstellt werden.

Die Erfindung wird nachfolgend unter Bezugnahme auf die Zeichnungen beispielhalber noch näher erläutert. In den Zeichnungen zeigt:
- Fig. 1 a und 1 b: ortsabhängige Leistungsverteilungen für Verfahren des Standes der Technik,
- Fig. 2a-2c: Schemazeichnungen für verschiedene Verfahren zur Auflösungssteigerung gemäß dem Stand der Technik,
- Fig. 3: ein auflösungsgesteigertes Fluoreszenzmikroskop nach dem Stand der Technik,
- Fig. 4: eine Fluoreszenzkennlinie einer Probe,
- Fig. 5: eine Schemazeichnung zur Auflösungssteigerung,
- Fig. 6a/b: ein- bzw. zweidimensionale Leistungsverteilungen, wie sie bei der Auflösungssteigerung nach einer ersten und zweiten Verfahrensform anfallen,
- Fig. 7: eine Darstellung ähnlich der Fig. 6a/b für eine dritte Verfahrensform,
- Fig. 8a/b: Darstellungen ähnlich der Fig. 6a/b für eine vierte und fünfte Verfahrensform,
- Fig. 9a/b: eine Schemazeichnung für ein erstes auflösungsgesteigertes Mikroskop,
- Fig. 10: eine Leistungsverteilung ähnlich der Fig. 6a zur Verdeutlichung der Wirkungsweise des Mikroskops der Fig. 9.
- Fig. 11a/b: eine Kennlinie ähnlich der Fig. 4 sowie eine Leistungsverteilung zur Verdeutlichung eines zweiten auflösungsgesteigerten Mikroskops.
- Fig. 12: eine Schemadarstellung des zweiten Mikroskops,
- Fig. 13: eine Schemadarstellung eines dritten auflösungsgesteigerten Mikroskops.
- Fig. 14: eine Schemadarstellung zur Funktionsweise des dritten Mikroskops,
- Fig. 15a/b: Schemadarstellungen von Teilen eines vierten Mikroskops,
- Fig. 16a: eine Verteilung der Anregungs- bzw. Rücksetzstrahlung in einer Pupille des vierten Mikroskops,
- Fig. 16b: eine mit dem vierten Mikroskop realisierte Multispotverteilung,
- Fig. 17: eine Fluoreszenzverteilung beim vierten Mikroskop,
- Fig. 18: eine Verteilung der Anregungs- bzw. Rücksetzstrahlung in einer Pupille einer Variante des vierten Mikroskops,
- Figur 19: eine Schemadarstellung eines Laser-Scanning-Mikroskops,
- Figur 20: eine alternative Ausgestaltung einer Beleuchtungsquelle für das Mikroskop der Figur 19.
- Figur 21: eine Draufsicht auf einen Strahlteiler des Mikroskops der Figur 19 und
- Figur 22: ein vom Mikroskop der Figur 19 bewirktes Beleuchtungsmuster auf der Probe.

Nachfolgend werden in verfahrenstechnischer Erläuterung sowie in Mikroskopbeschreibungen verschiedene Anordnungen zur auflösungsgesteigerten Lumineszenzmikroskopie dargestellt. Dies geschieht rein exemplarisch anhand verschiedener Fluoreszenzmikroskope bzw. Fluoreszenzmikroskopieverfahren. Natürlich sind die nachfolgend geschilderten Beispiele, d.h. Verfahrensformen und Mikroskope, auch für andersartig lumineszierende Substanzen einsetzbar, beispielsweise für phosphorisierende Proben oder Farbstoffe. Soweit nachfolgend von einem Farbstoff gesprochen wird, so ist auch dies nur beispielshalber aufzufassen. Anstelle eines Farbstoffes, der zur Präparation einer Probe eingesetzt werden kann, kann natürlich auch eine direkt fluoreszierende (oder phosphorisierende) Substanz als Probe treten, wodurch eine Farbstoffzugabe entbehrlich ist. Auch können zusätzliche Farbstoffe verwendet werden, die andere Eigenschaften zeigen und nicht in einen zweiten Zustand bringbar sind. Weiter können für einzelne Verfahrensformen oder Mikroskope geschilderte Merkmale auch für andere beschriebene Verfahrensformen oder Mikroskope eingesetzt werden, so daß auch hier nicht geschilderte Kombinationen möglich sind.

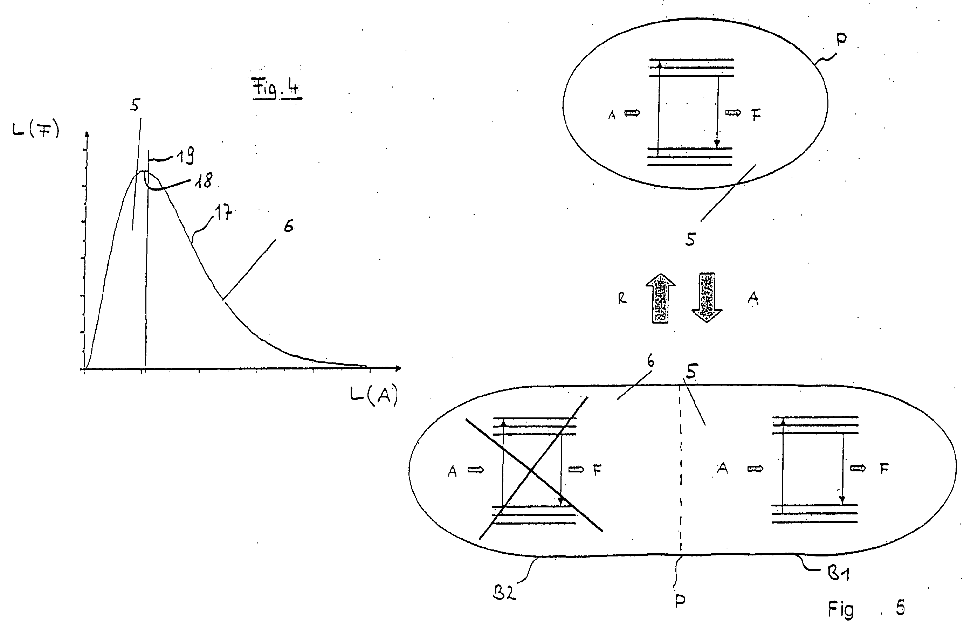

Fig. 4 zeigt beispielshalber eine Fluoreszenz-Kennlinie 17 für einen Farbstoff, der verwendet wird. Diese Fluoreszenz-Kennlinie 17 gibt die Leistung L der abgegebenen Fluoreszenzstrahlung F als Funktion der Leistung L der Anregungsstrahlung A wieder. Wie zu sehen ist, steigt die Kennlinie 17 weitgehend linear, jedenfalls monoton, bis zu einem Maximum 18 und fällt dann oberhalb eines Schwellwerts 19 für die Anregungsstrahlungsleistung wieder ab. Erkennbar sind zwei Zustands-Regionen, die jeweils links und rechts vom Schwellwert 19 bzw. dem Maximum 18 liegen. Wird eine Anregungsstrahlungsleistung unterhalb des Schwellwerts 19 eingestrahlt, befindet sich der Farbstoff vorrangig in einem ersten Zustand 5. In diesem kann er Fluoreszenzstrahlung abstrahlen. Wird die Anregungsstrahlungsleistung über den Schwellwert 19 erhöht, findet eine Umschichtung der Farbstoffmoleküle in einen zweiten Zustand 6 statt. Farbstoffmoleküle im zweiten Zustand 6 können entweder nicht fluoreszieren, strahlen eine Fluoreszenzstrahlung mit geänderten optischen Eigenschaften ab und/oder besitzen eine gegenüber dem ersten Zustand 5 geänderte Absorptionseigenschaft. Die geänderten optischen Eigenschaften für Fluoreszenzemission oder Absorption können die spektrale Zusammensetzung, die Polarisation und/oder die Lebensdauer der Fluoreszenzstrahlung betreffen. Im Ergebnis fällt in der zweiten Zustands-Region die Leistung der Fluoreszenzstrahlung F, wenn man sich auf die Art der Fluoreszenzstrahlung, die im ersten Zustand 5 abgeben wird, bezieht, wieder ab.

Die Kennlinie 17 wird dahingehend eingesetzt daß die Einstrahlung der Anregungsstrahlung A nur einen Teil der Probe in die erste Zustands-Region (oder kurz ersten Zustand) 5, einen anderen Teil der Probe jedoch in die zweite Zustands-Region (oder kurz zweiten Zustand) 6 bringt. Bereiche, die mit Anregungsstrahlungsleistung oberhalb des Schwellwertes 19 beleuchtet wurden/werden, emittieren somit die bestimmte Fluoreszenzstrahlung nur vermindert. Dabei ist es vorteilhaft, wenn der zweite Zustand 6 ein reversibler Zustand ist. Dies bedeutet, daß zumindest nach einer gewissen Zeit oder nach aktiver Einwirkung ein einmal mit Anregungsstrahlungsleistung oberhalb des Schwellwertes 19 bestrahlter Farbstoff wieder die Eigenschaften des ersten Zustandes 5 zeigt. Ein Beispiel für einen Farbstoff, für den die Erfinder eine Kennlinie gemäß der Fig. 4 erkannten, ist die als Dronpa bezeichnete Substanz, die in der Veröffentlichung R. Ando et al., "Regulated fast nucleocytoplasmic shuttling observed by reversible protein highlighting", Science, 19. November 2004, Vol. 306, S. 1370-1373, beschrieben ist. Der Farbstoff ist von der Firma Amalgaam, Woburn, Massachusetts, USA, unter der Bezeichnung Dronpa-Green, Code-Nr. AM-V0071, verfügbar und bislang im Zusammenhang mit der Fluoreszenzmarkierung von Molekülen, deren Transporteigenschaften durch Zellmembranen untersucht werden sollen, bekannt. Der Farbstoff Dronpa kann bei einer Wellenlänge von 488 nm angeregt werden, und nach Anregung in den zweiten Zustand 6 durch Strahlung bei einer Wellenlänge von 405 nm wieder in den ersten Zustand 5 zurückgeführt werden.

In Kombination mit einer geeigneten Anregungsstrahlungsverteilung beim Beleuchten der Probe führt die Verwendung des Farbstoffes mit der Kennlinie der Fig. 4 oder einer entsprechenden Kennlinie zu einer deutlichen Steigerung der Auflösung. Dabei wird im Gegensatz zum Stand der Technik nur Strahlung mit einer Wellenlänge eingestrahlt, und nur diese Strahlung trägt zur Auflösung bei. Das Rückschalten kann bei Beispielen, bei denen der Farbstoff nicht spontan in den ersten Zustand 5 zurückkehrt, durch Einstrahlung einer Rücksetzstrahlung R erreicht werden, die jedoch zur Auflösungssteigerung unbeachtlich ist.

Mit der Anregungsstrahlung A wird neben der Anregung der Farbstoffmoleküle aus dem Grundniveau heraus in das erste angeregte Niveau (erster Zustand 5) auch die Verhinderung von Fluoreszenz oder auch eine Entvölkerung (zweiter Zustand 6) bewerkstelligt. Bei der Entvölkerung erfolgt eine Umlagerung der Farbstoffmoleküle aus dem ersten Zustand in den zweiten Zustand. Die beiden Zustände haben voneinander verschiedene optische Fluoreszenzeigenschaften. Nach der Anregung mit der Anregungsstrahlung A kann sofort das hochaufgelöste Fluoreszenzbild gewonnen werden, wobei hochaufgelöst sich auf die optische Auflösung der Anregungsstrahlung A bezieht. Falls der Farbstoff aus dem zweiten Zustand nicht spontan in den ersten Zustand zurückkehrt, wird aktiv eine Rücksetzung, beispielsweise mittels einer Rücksetzstrahlung R, die von der Anregungsstrahlung A verschiedene optische Eigenschaften aufweist, bewerkstelligt. Das entsprechende Schema zeigt Fig. 5.

Ursprünglich befindet sich z.B. die zu untersuchende Probe P im ersten Zustand 5, in dem die Leistung der Fluoreszenzstrahlung F mit der Leistung der Anregungsstrahlung A steigt. Die Einstrahlung der Anregungsstrahlung A erfolgt nun so, daß in einzelnen Proben-Bereichen B2 die Anregungsstrahlungsleistung über dem Schwellwert 19 liegt. In anderen Bereichen B1 liegt sie darunter. Somit sind einige Probenbereiche im ersten Zustand 5, andere im zweiten Zustand 6, je nach dem ob die Leistung der Anregungsstrahlung über oder unter dem Schwellwert 19 liegt. Fig. 5 zeigt schematisch die Überführung der Probe durch Einstrahlung von Anregungsstrahlung A in Probenbereiche B1 im ersten Zustand 5 (rechter Teil der unteren Hälfte der Fig. 5) sowie Probenbereiche B2 im zweiten Zustand 6 (linker Teil). Probenbereiche B2 im zweiten Zustand 6 können nicht mehr effizient fluoreszieren, vor allem wenn eine Anregungsstrahlungsleistung deutlich über dem Schwellwert 19 verwendet wurde. Der Begriff "fluoreszieren" bezieht sich dabei auf Fluoreszenzstrahlung mit bestimmten Eigenschaften. Es ist also durchaus möglich, daß auch im zweiten Zustand 6 Fluoreszenzstrahlung abgegeben wird, jedoch mit anderen Eigenschaften als im ersten Zustand 5. Entweder ändern sich im zweiten Zustand also die Absorptionseigenschaften oder/und die Fluoreszenzeigenschaften der Probe.

Bereiche B1 der Probe, die im ersten Zustand 5 bleiben, emittieren nach Einstrahlung von Anregungsstrahlung A weiterhin dieselbe Fluoreszenzstrahlung F. Einstrahlung von Rücksetzstrahlung R (in Figur 5 ist dieser Vorgang durch einen entsprechenden Pfeil veranschaulicht) bringt die gesamte Probe P wieder in den ersten Zustand 5, reversiert also die Aufteilung in zwei verschieden fluoreszierende Probenbereiche B1 und B2.

Die Aufteilung der Probe in Probenbereiche B1, die sich im ersten Zustand 5 befinden, und Probenbereiche B2, die sich im zweiten Zustand 6 befinden, ermöglicht es nun, die Emission von Fluoreszenzstrahlung F auf ein Volumen der Probe P zu beschränken, das kleiner ist, als das ursprüngliche mit Anregungsstrahlung A beleuchtete Volumen. Es läßt sich somit also eine Struktur im fluoreszierenden Bild erreichen, die ursprünglich in der Anregungsstrahlungsverteilung nicht vorhanden war. Ursache dafür ist die geschickt eingesetzte Nichtlinearität der Kennlinie 17.

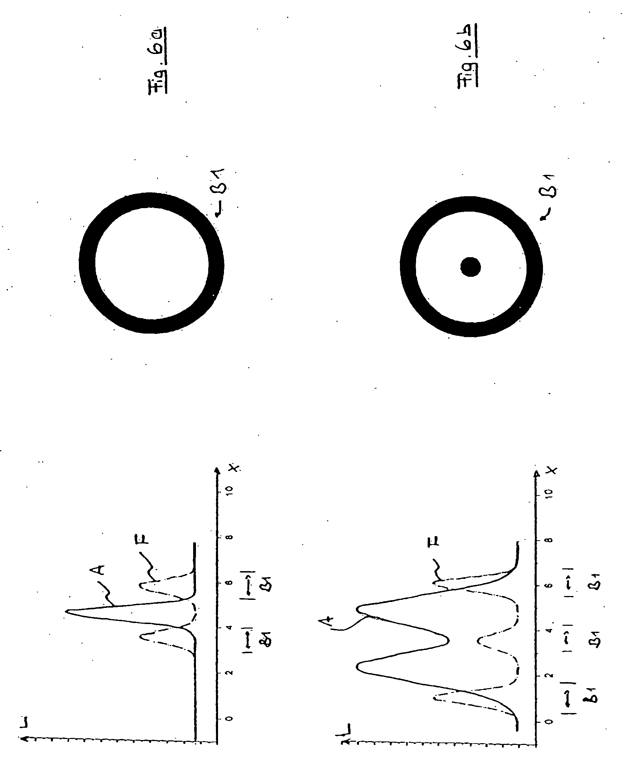

Die Fig. 6a und 6b zeigen zwei Verfahrensformen, wie die Anregungsstrahlungsverteilung zur Auflösungssteigerung aussehen kann. Beide Figuren zeigen links einen eindimensionalen Schnitt durch die Anregungsstrahlungsverteilung bzw. Fluoreszenzstrahlungsverteilung. Jeweils rechts ist das zweidimensionale Bild der Fluoreszenzstrahlungsverteilung in Draufsicht zu sehen.

In Fig. 6a wird eine punkförmige verteilte Anregungsstrahlung A eingestrahlt. Die Verteilung ist hier eine beugungsbegrenzte Airy-Verteilung. Hierdurch wird im Farbstoff Fluoreszenzstrahlung F mit einer ellipsoidförmigen Donut-Verteilung angeregt, die sich im zweidimensionalen Bild als lateral fluoreszierender, kreisförmiger Ring darstellt. Es fluoreszieren nur die Proben-Bereiche B1. Axial liegt ein fluoreszierender ellipsenförmiger Ring dar. Dieser Probenbereich B1 ist kleiner als die Beugungsgrenze der Anregungsstrahlung erlaubt.

Strahlt man dagegen, wie in Fig. 6b gezeigt, eine ebenfalls beugungsbegrenzte Donut-förmige Verteilung der Anregungsstrahlung A ein, ergibt sich ein abstrahlender Proben-Bereich B1, der einer verkleinerten Airy-Verteilung entspricht, welche von einem ringförmigen fluoreszierenden Bereich umgeben ist. In der Schnittdarstellung zeigen sich in der Verteilung der Fluoreszenzstrahlung F deshalb drei Peaks als Proben-Bereiche B1. Auch hier ist die Punktverwaschungsverteilung 16 kleiner als die Beugungsgrenze zuläßt. Die Verbesserung der Auflösung über die normale Punktverwaschungsverteilung hängt wesentlich von der Kombination aus Kennlinie 17 und Leistungsverteilung der Anregungsstrahlung A ab.

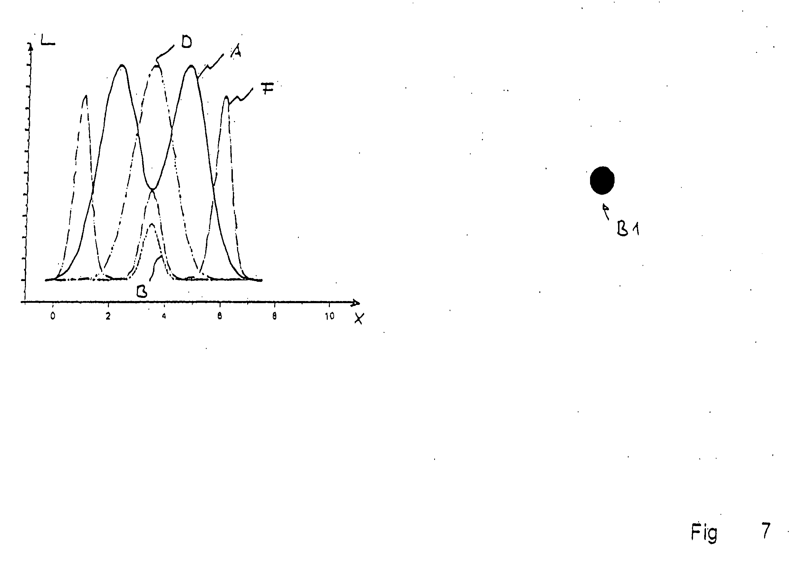

Zur Ausblendung des ringförmigen Außenbereichs ist es zusätzlich möglich, eine konfokale Detektion durchzuführen, die den mittleren Peak durch geeignete Einstellung eines konfokalen Detektionsvolumens D auswählt. Dies ist schematisch als dritte Verfahrensform in Fig. 7 dargestellt. Der nun noch detektierte fluoreszierende Proben-Bereich B1 besteht dann aus dem mittleren Peak. Insgesamt ist z.B. ein bildgebendes Volumen B (punktierte Linie in der rechten Darstellung der Fig. 7) erreicht, das zweieinhalb mal schmäler ist, als die konventionelle Punktverwaschungsverteilung, und sogar 1,7-mal schmäler, als eine konfokale Punktverwaschungsverteilung. Bei einer Donut-förmigen Anregungsverteilung, wie sie die durchgezogene Kurve in der rechten Darstellung der Fig. 6b bzw. 7 zeigt, ist die resultierende Verteilung des bildgebenden Volumens B bzw. der mittlere Peak der Punktverwaschungsverteilung der Fig. 6b radialsymmetrisch. Verwendet man zwei Beleuchtungsspots, erreicht man eine maximale Auflösungssteigerung entlang der Verbindungslinie der Spotmaxima.

Alternativ wird der äußere fluoreszierende Ring in Fig. 6b durch ein gezieltes Rückschalten des Farbstoffs aus dem zweiten Zustand 6 in den ersten Zustand 5 im Bereich des konfokalen Detektionsvolumens D ausgeblendet. Das Vorgehen/Prinzip ist dann wie folgt: Zuerst wird mit Anregungsstrahlung so angeregt, daß der zu untersuchende Probenabschnitt vollständig in den zweiten Zustand gelangt. Anschließend wird Rücksetzstrahlung R mit einer Verteilung entsprechend dem konfokalen Detektionsvolumen D eingestrahlt und damit ein Teil der Probe zurückgeschaltet. Bei nochmaliger Anregung mit der Anregungsstrahlungsverteilung A gemäß Fig. 7 gelangt dann nur der in diesem Probenteil liegende bildgebende Bereich B in den ersten Zustand und emittiert Fluoreszenzstrahlung F in Form des mittleren Peaks, wie er auch in der Variante der Fig. 7 verbleibt. Der ringförmige Außenbereich verbleibt im zweiten Zustand und fluoresziert nicht.

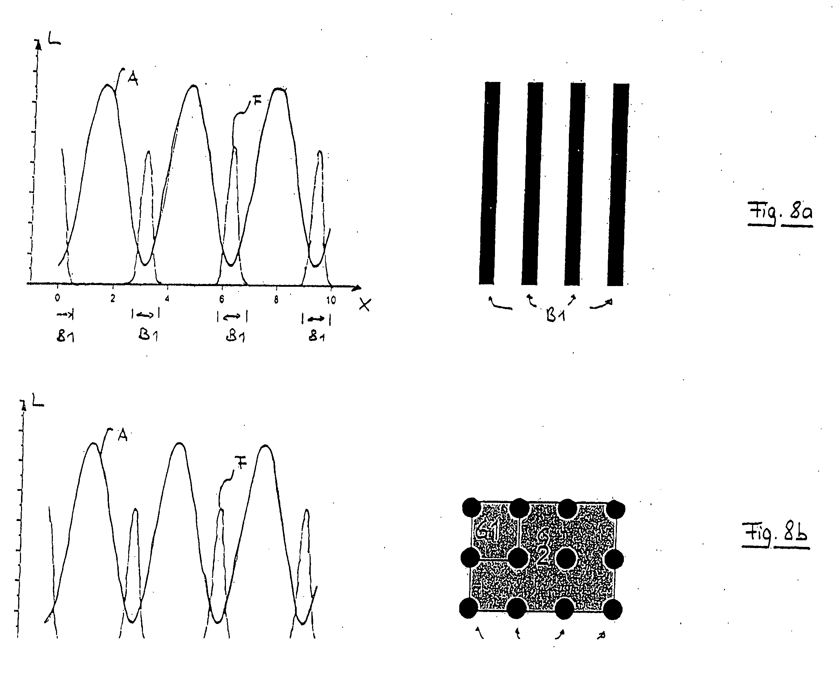

In einer vierten Verfahrensform erfolgt eine strukturierte flächige Beleuchtung, wie sie beispielsweise in Fig. 8a gezeigt ist. Eine in x-Richtung sinusförmig verteilte Anregungsstrahlung A führt in den Tälern der sinusförmigen Leistungsverteilung zu Fluoreszenzstrahlung F. Die fluoreszierenden Proben-Bereiche B1 sind streifenförmig. Die Streifen sind jedoch deutlich schmaler als die Streifen der sinusförmigen Verteilung der Anregungsstrahlung A. Vorteilhaft ist hierbei, daß die sinusförmige Verteilung der Anregungsstrahlung A als Minima keine Nullstellen aufweist bzw. aufweisen muß. Die resultierende Verteilung der Fluoreszenzstrahlung F hängt zwar in ihrer Höhe, nicht jedoch in der Breite von der Leistung der Anregungsminima ab. Die Tiefe der Minima der sinusförmigen Anregungsstrahlungsverteilung ist also unkritisch für die Breite der Streifen und somit für die Auflösung. Im Beispielfall ist die Periode der sinusförmigen Streifenverteilung der Anregungsstrahlung A an der Grenzfrequenz der Auflösung eingestellt. Als Detektor wird z.B. ein Matrixdetektor verwendet. Die Streifenbreite und mithin die Auflösung ist um Faktor 6 gegenüber der Grenzfrequenz der Auflösung verbessert. Ein hochaufgelöstes Bild wird nun durch Verschiebung des Streifenmusters gewonnen.

Alternativ kann statt einer streifenförmigen Weitfeldbeleuchtung auch eine brennlinienförmige Beleuchtung verwendet werden, wobei die Linie entlang ihrer Längsachse (z.B. sinusförmig) moduliert ist, so daß die Leistung in Linienabschnitten über dem Schwellwert und in Linienabschnitten unter dem Schwellwert liegt. Die Scanbewegung erfolgt senkrecht zur Linie und entlang der Linie. Der Detektor ist ein geeignet hochauflösender Zeilendetektor.

Fig. 8b zeigt eine Weiterbildung der vierten Verfahrensform der Fig. 8a. In dieser fünften Verfahrensform erfolgt die Strukturierung der Verteilung der Auflösungsstrahlung A in beiden lateralen Achsen, d. h. in der Probenebene, so daß eine matrixförmige Beleuchtungsspotverteilung gegeben ist. Dies ist in der Schnittdarstellung der linken Hälfte der Fig. 8b eindimensional dargestellt. Senkrecht zur optischen Achse ist eine Matrix aus hellen Anregungsspots auf die Probe abgebildet. Jedem Beleuchtungsspot wird nun ein Detektor zugeordnet. Eine Verschiebung des Spotmusters relativ zur Probe erlaubt es, die Zwischenräume zwischen den Punkten ebenfalls zu vermessen. Der Bereich in dem die Verschiebung des matrixförmigen Musters zu erfolgen hat, ist in Fig. 8b als Gebiet G1 dargestellt. Durch eine Abrasterung der Spotmatrix, beispielsweise wie mit einem konventionellen Laserscanningmikroskop bekannt, wird insgesamt das gesamte Gebiet G2 aus Einzelgebieten G1 zusammengesetzt. Durch diese Parallelisierung ist eine sehr hohe Scangeschwindigkeit erreicht. Zugleich ist die Auflösung, wie die schmalen Peaks der Fluoreszenzstrahlung F in der Schnittdarstellung zeigen, über die Auflösung der Anregungsstrahlungsverteilung hinaus gesteigert.

Obwohl bislang nur die laterale Auflösung erwähnt wurde, ist auch die axiale Auflösung verbessert.

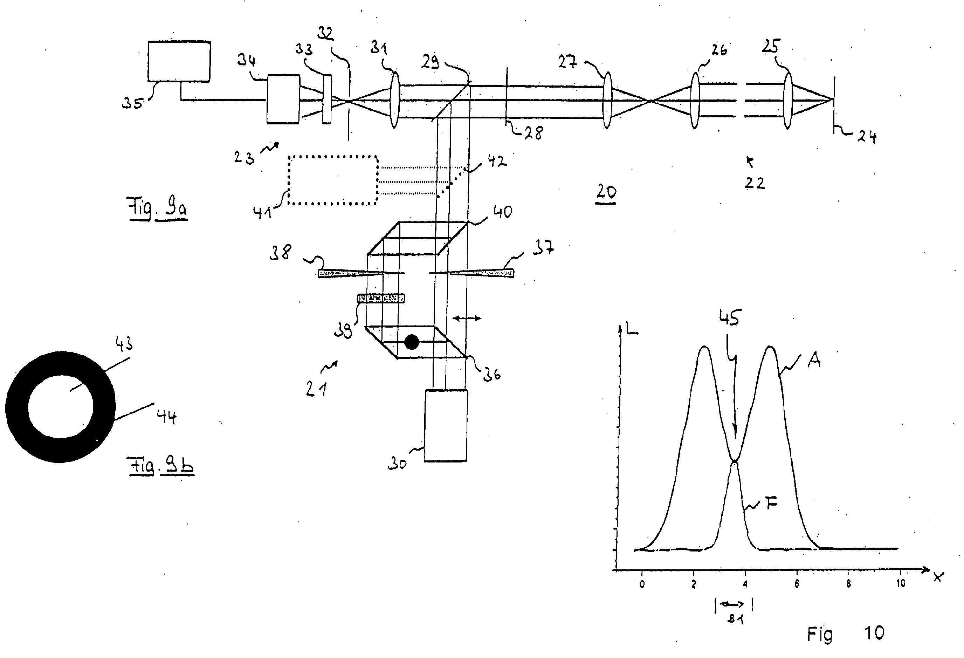

Fig. 9a zeigt ein Laserscanningmikroskop, das jede der erläuterten Verfahrensformen realisieren kann. Für die Verfahrensformen 1 bis 3 ist das Laserscanningmikroskop 20 z. B. als einzelpunktscannendes Mikroskop ausgebildet. Es weist ein Anregungsmodul 21, ein Mikroskopmodul 22 sowie ein Detektormodul 23 auf. Im Mikroskopmodul 22 befindet sich eine Probe 24 im Fokus eines Objektivs 25, dem in Beleuchtungsrichtung eine Tubuslinse 26 vorgeschaltet ist. Vor dieser Optik liegt eine Scanoptik 27, die zusammen mit einem Scanner 28 ein Abscannen der Probe 24 durch Verschieben des Fokuspunktes auf der Probe ermöglicht. Ein Hauptfarbteiler 29 koppelt die Strahlung aus dem Anregungsstrahlungsmodul 21 in das Mikroskopmodul 22 ein und trennt aus dem Mikroskopmodul 22 von der Probe 24 aufgenommene Strahlung zum Detektormodul 23 ab.

Das Anregungsmodul 21 verfügt über eine Lichtquelle 30, deren Strahlung über den Hauptfarbteiler 29 zum Fokuspunkt in der Probe 24 gebündelt wird. Die im Fokuspunkt der Probe 24 angeregte Fluoreszenzstrahlung F wird vom Objektiv 25 gesammelt und am Hauptfarbteiler 29 aufgrund der im Vergleich zur Anregungsstrahlung A geänderten Spektraleigenschaften zu einer Pinholeoptik 31 ausgekoppelt, der ein Pinhole 32 sowie ein (optionaler) Blockfilter 33 nachgeschaltet sind. Ein Punkt-Detektor 34 erfaßt die Leistung der Fluoreszenzstrahlung F am Fokuspunkt. Die Erfassung kann zusätzlich spektral aufgelöst, polarisationsaufgelöst und/oder zeitaufgelöst erfolgen. Die Signale des Detektors 34 werden von einem Steuergerät 35 ausgelesen, das insgesamt den Betrieb des Laserscanningmikroskops 20 steuert.

Zur Auflösungssteigerung erfolgt die Einstrahlung der Anregungsstrahlung A in den Fokuspunkt 24 mit einer bestimmten Leistungsverteilung. Um diese vorzugeben und einzustellen, ist ein geeigneter Aufbau im Anregungsmodul 21 vorgesehen. Die Bauweise der Fig. 9a weist einen Strahlteiler 36 auf, der 50% der Strahlleistung der Lichtquelle 30 auskoppelt. In der Anordnung handelt es sich bei dem Strahlteiler 36 um einen Polarisationsstrahlteiler. Die derart aufgespaltenen Teilstrahlen werden nachher über einen weiteren Strahlteiler 40 wieder zu einem gemeinsamen Strahl überlagert, wobei die Intensitäten und Phasen der Teilstrahlen zuvor geeignet eingestellt werden. Zusätzlich ist in einem Teilstrahl ein Phasenelement 39 gestellt, das entweder als festes Phasenelement oder als variabel einstellbares Phasenelement ausgebildet werden kann. Das Phasenelement 39 hat z. B. einen phasenverändemden Bereich 44 sowie einen phasenneutralen Bereich 43, so daß eine donutförmige Leistungsverteilung im Strahl erzeugt wird. Nach Überlagerung der beiden Teilstrahlen nach dem Strahlteiler 40 erhält man Anregungsstrahlung A gemäß Fig. 10. Der Aufbau des Phasenelementes 39 ist exemplarisch in Fig. 9b gezeigt. Zur Einstellung der Leistungsanteile der beiden Teilstrahlen vor der Überlagerung sind in jeden Teilstrahl noch variable Abschwächer 37 bzw. 38 gestellt.

Im Ergebnis erhält man eine Verteilung der Leistung der Anregungsstrahlung A, wie sie in Fig. 10 als Schnittdarstellung entlang einer senkrecht zur optischen Achse verlaufende x-Achse gezeigt ist. Die Verteilung weist ein Minimum 45 auf, dessen Tiefe durch Einstellung der Abschwächer 38 bzw. 37, d.h. durch Änderung der relativen Leistung der beiden Teilstrahlen variabel einstellbar ist, z. B. durch das Steuergerät 35. Die Anpassung des Minimums 45 erlaubt es, die Intensität der ebenfalls in Fig. 10 eingezeichneten Fluoreszenzstrahlung F optimal einzustellen.

Das hinsichtlich der Tiefe einstellbare Minimum 45 kann auch durch den Einsatz eines variabel einstellbaren Phasenelementes ohne Bildung von Teilstrahlen erzeugt werden. Für ein solches Phasenelement kommt eine Matrix aus Flüssigkristallen in Frage, bei der die Phase jedes einzelnen Pixels einstellbar ist. Natürlich sind noch andere Einrichtungen zur Erzeugung einer donatförmigen Strahlverteilung mit einstellbarem Minimum 45 möglich.

Für ein optionales Rückschalten der Proben-Bereiche B2 vom zweiten Zustand 6 in den ersten Zustand 5 kann eine Rücksetzstrahlungsquelle 41 vorgesehen werden, die über einen dritten Teiler 42 in den Anregungsstrahlengang des Anregungsmoduls 21 eingebunden ist. Diese Bauweise ist jedoch optional, weshalb die Darstellung der Fig. 9a auch eine gestrichelte Darstellung für diese Elemente zeigt. Die Rücksetzstrahlungsquelle 41 ist nur dann erforderlich. wenn der Farbstoff der Probe 24 nicht spontan wieder in den ersten Zustand zurückkehrt, sondern eines aktiven Rücksetzens durch optische Rücksetzstrahlung R bedarf. Rücksetzstrahlung kann jedoch auch anderweitig auf die Probe 24 aufgebracht werden, beispielsweise durch eine Einstrahlung schräg zur optischen Achse des Objektivs 25 mit Hilfe einer seitlich vom Laserscanningmikroskop angebrachten Rücksetzstrahlquelle.

Das Mikroskop der Fig. 9a kann die eingangs geschilderten Verfahrensformen ausführen. Die dritte Verfahrensform erfordert dabei die Verwendung des Pinholes 32 und der Pinholeoptik 31 im Detektormodul 23. Immer dann, wenn man keine konfokale Detektion benötigt, können die dafür nötigen Bauteile (31, 32) entfallen.

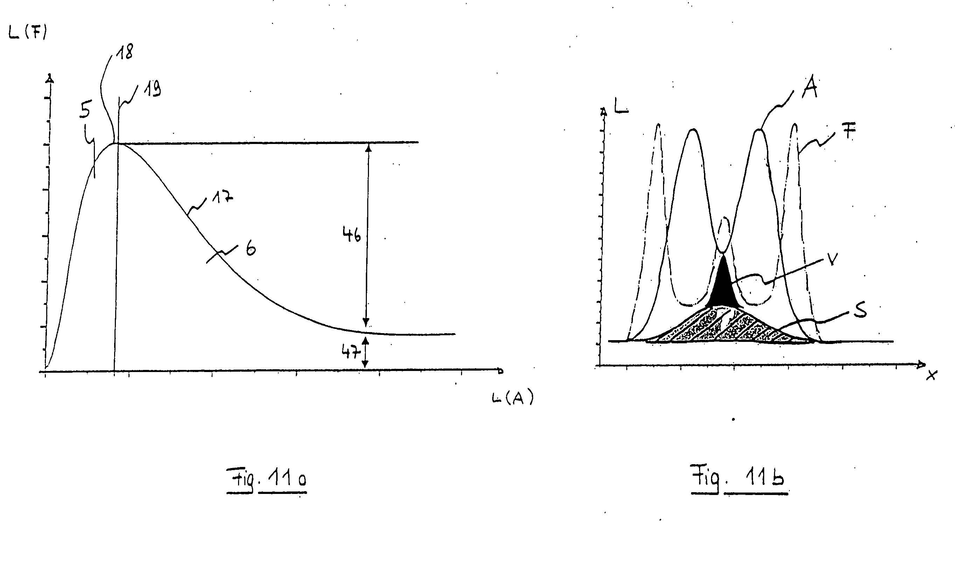

Fig. 11 a zeigt eine weitere Verbesserungsmöglichkeit des Vorgehens auf. Der Übergang der Probe im Teil-Bereich B2 aus dem ersten Zustand in den zweiten Zustand 6 kann unvollständig stattfinden. Dies ist beispielsweise dann der Fall, wenn die Fluoreszenzkennlinie 17 nach dem Maximalwert 18, d.h. für Leistungen der Anregungsstrahlung A oberhalb des Schwellwertes 19, nicht steil genug abfällt. Im Beispiel der Fig. 11 a geht die Kennlinie 17 auch bei hohen Anregungsstrahlungsleistungen nicht auf Null zurück. Dies führt zu einer Restfluoreszenz 47 in den Proben-Bereichen B2, die im zweiten Zustand 6 sind, da der geminderte Anteil 46 nicht dem Maximalwert 18 entspricht. Würde man die Fluoreszenzstrahlung F dann mit dem Mikroskop gemäß Fig. 9a beispielsweise in Realisierung der dritten Verfahrensform vermessen, so würde sich das bildgebende Volumen B aus einem niedrig aufgelösten Sockel S und einer hochaufgelösten Verteilung V zusammensetzen. Dies ist in Fig. 11b schematisch dargestellt, die den Sockel S schraffiert und die hochaufgelöste Verteilung V schwarz zeigt.

Der gleiche Effekt kann auftreten, wenn in der Probe eine starke Diffusion des fluoreszierenden Materials, beispielsweise der Farbstoffmoleküle, herrscht. Auch dann ergibt sich eine Restfluoreszenz 47 in den Proben-Bereichen B2, jedoch nicht aufgrund einer vergleichsweise schwach abfallenden Kennlinie 17, sondern durch Diffusion des fluoreszierenden Materials.

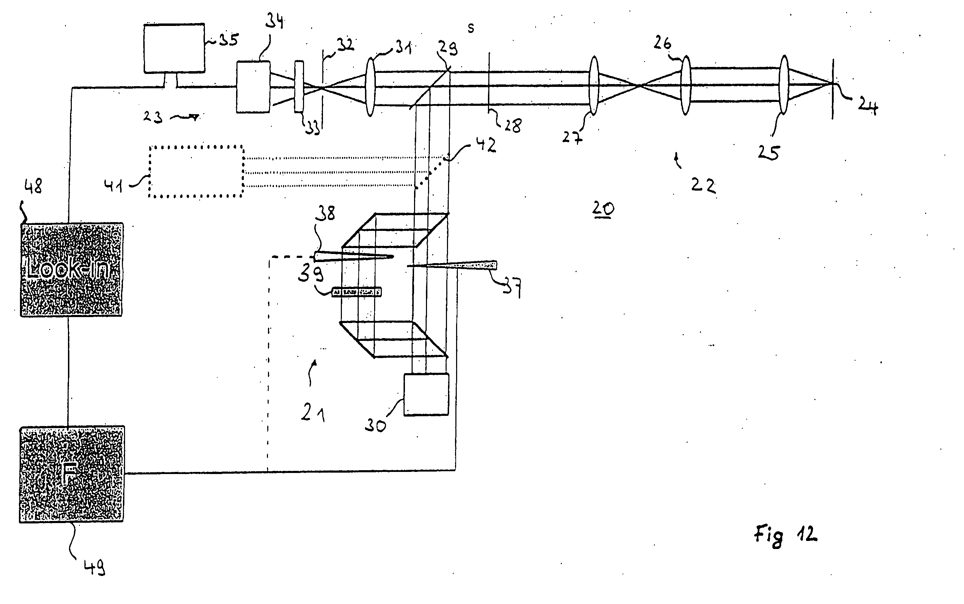

Der Sockel S läßt sich durch geeignete Bildaufnahme unterdrücken. Eine dies realisierende zweite Anordnung eines Laserscanningmikroskops 20 ist exemplarisch in Fig. 12 dargestellt. Mit der Bauweise gemäß Fig. 9a übereinstimmende Komponenten sind mit denselben Bezugszeichen versehen, so daß auf ihre nochmalige Erläuterung verzichtet werden kann.

Im Unterschied der Bauweise der Fig. 9a ist nun der Detektor 34 mit einem Lock-In-Verstärker 48 verbunden, wobei diese Verbindung in Fig. 12 lediglich exemplarisch über das Steuergerät 35 realisiert ist. Natürlich ist auch eine direkte Verbindung möglich. Auch kann der Lock-In-Verstärker 48 in das Steuergerät 35 integriert werden. Der Lock-In-Verstärker 48 ist mit einem Frequenzgenerator 49 verbunden, der das Minimum 45 in seiner Amplitude moduliert. Hierzu wird die Leistung einer der beiden Teilstrahlen im Anregungsmodul 21 geeignet moduliert, was z.B. durch eine Ansteuerung einer der beiden Abschwächer 37 oder 38 geschieht. In der Darstellung der Fig. 12 ist die Ansteuerleitung für den Abschwächer 38 gestrichelt dargestellt, um diese Option anzudeuten. Natürlich kann die Ansteuerung der Abschwächer auch durch das Steuergerät 35 erfolgen, das das Signal des Frequenzgenerators 49 entsprechend auswertet. Wie bereits erwähnt, können der Lock-In-Verstärker 48 und/oder der Frequenzgenerator 49 Bestandteile des Steuergerätes 35 sein.

Die vom Frequenzgenerator 49 zur Modulation des Minimums bereitgestellten Frequenz wird auch dem Lock-In-Verstärker 48 zugeführt. Durch die Modulation des Minimums 45 verändert sich das Signal aus den Proben-Bereichen im ersten Zustand 5, wohingegen Signale aus dem Sockel S konstant bleiben. Der Lock-In-Verstärker 48 separiert die modulierten Signale heraus und unterdrückt Signale aus dem Sockel S. Im Ergebnis erfolgt eine Trennung der Verteilung V vom Sockel S, und die hochaufgelöste Detektion ist auch bei einem unvollständigem Übergang in den zweiten Zustand 6 erreicht.

Verwertet man gezielt den Gleichanteil des Signals, erreicht man eine zusätzliche Bildinformation, die nicht hochaufgelöst ist. Diese Bildinformation kann sich z.B. auf andersartig fluoreszierende Proben-Bereiche/-Eigenschaften beziehen. Die hoch und niedrig aufgelösten können beliebig codiert (z.B. farbcodiert) überlagert dargestellt werden.

Alternativ oder zusätzlich zu dieser Lock-In-Detektion können auch zwei Bilder aufgezeichnet werden. Ein erstes Bild wird mit Anregungsstrahlungsverteilung mit Minimum 45, das zweite ohne Minimum 45 aufgezeichnet. Zur Separierung der hochaufgelösten Verteilung V vom Sockel S werden dann nur noch die Bilder voneinander subtrahiert (erstes Bild minus zweites Bild). Das Ergebnisbild enthält nur noch die Informationen mit der hochaufgelösten Verteilung V. Weitere Möglichkeiten zur Unterdrückung eines niedrig aufgelösten Sockels können die Nutzung der unterschiedlichen optischen Eigenschaften des ersten Zustands 5 und des zweiten Zustands 6 sein, beispielsweise wenn sich die Lebensdauer der beiden Zustände unterscheiden. Auch kann man eine unterschiedliche Charakteristik des Emissionsspektrums verwenden, bzw. eine unterschiedliche Charakteristik des Absorptionsspektrums zwischen erstem Zustand 5 und zweiten Zustand 6.

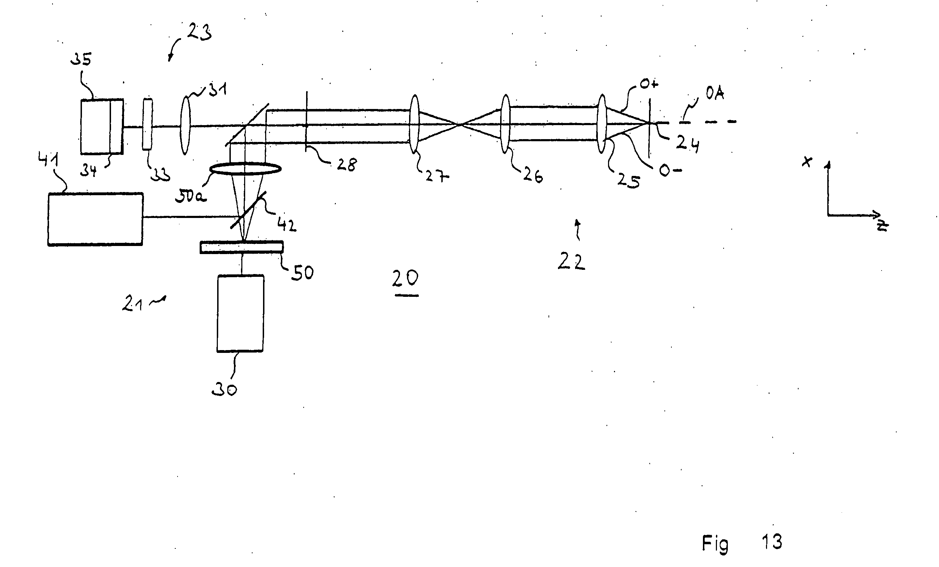

Fig. 13 zeigt eine nochmalige Abwandlung des Laserscanningmikroskops 20 der Fig. 9a zur Realisierung einer der Verfahrensformen mit linienförmiger Beleuchtung. Auch hier sind mit der Fig. 9a übereinstimmende Elemente mit denselben Bezugszeichen gekennzeichnet, so daß auf deren Beschreibung wiederum verzichtet werden kann. Weiter sind nur die Mittelstrahlen eingezeichnet.

Die nun kohärente Lichtquelle 30 strahlt ihre Strahlung durch ein Gitter 50, das zwei 1. Beugungsordnungen, o+ und o-, sowie eine 0.-Beugungsordnung erzeugt. Dem Gitter ist eine Zylinderlinse 50a nachgeordnet, die hier ein Beispiel für ein anamorphotisches Element ist. Auf die Probe wird eine senkrecht zur optischen Achse liegende Linie fokussiert.

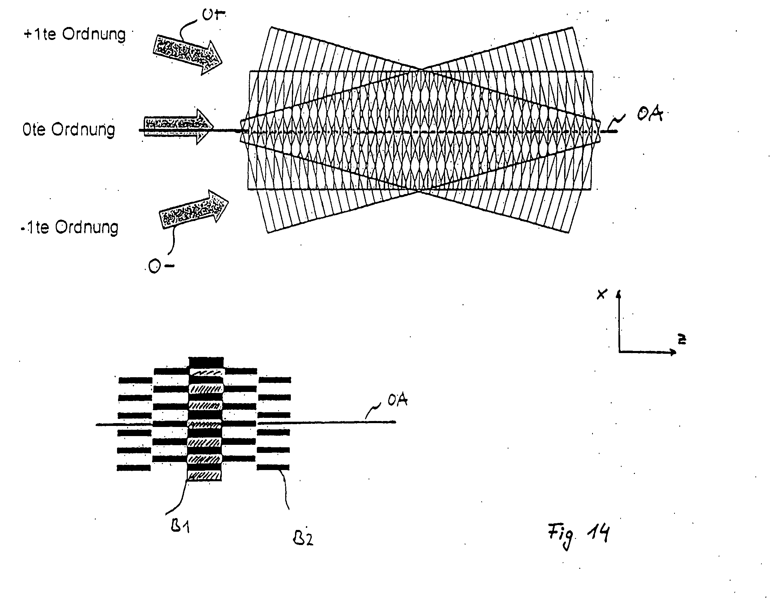

Die Beugungsordnungen fallen beim Fokussieren streifend zueinander ein und gelangen so in der Probe zur Interferenz. Durch den Talbot-Effekt entsteht ein sogenanntes Talbotgitter entlang der optischen Achse OA. Dies ist schematisch in der oberen Hälfte der Fig. 14 gezeigt. Die +1., die 0. sowie die -1. Ordnung fallen in der Probe 24 unter verschiedenen Winkeln ein und die Interferenzen erzeugen die dem Fachmann bekannte Talbotstruktur.

Die Wirkung innerhalb der Probe zeigt sich in der unteren Hälfte Fig. 14, die einen Tiefenschnitt (x,z-Ebene) durch die Probe zeigt. An den Stellen hoher Intensität (schwarze Bereiche B2) gelangt die Probe in den zweiten Zustand 6, d. h. es wird eine Entvölkerung der angeregten Zustände durch Umschalten der Farbstoffmoleküle erreicht. In den Bereichen B1 geringer Intensität verbleibt die Probe im ersten Zustand 5 (schraffierte und weiße Bereiche).

Die Detektion erfolgt mit einem Zeilendetektor 34, der in der Bauweise der Fig. 13 exemplarisch als mit dem Steuergerät 35 vereinigt dargestellt ist. Dem Zeilendetektor 34 ist wieder (optional) ein Blockfilter 33 vorgestellt. Weiter ist dem Zeilendetekor 34 eine (in Fig. 13 nicht dargestellte, da direkt auf den Zeilendetektor 34 aufgebrachte) entlang der x-Achse liegende Schlitzblende vorgeordnet, um die erforderliche konfokale Selektion einer Tiefenebene zu bewirken und dadurch nur die schraffierten Bereiche zu detektieren.

Der Scanner 28 ermöglicht die Bewegung der Anregungsstrahlungsverteilung über die Probe 24 senkrecht zur optischen Achse, also entlang der x- und y-Achse. Optional kann mit der Rücksetzstrahlungsquelle 41 beispielsweise eine homogene Line entlang der x-Achse in der Probe 24 erzeugt werden, die ein Umschalten der Farbstoffe aus dem zweiten Zustand 6 in den ersten Zustand 5 ermöglicht, wie dies Fig. 5 veranschaulicht. Diese Linie kann auch ein Beleuchtungsmuster aufweisen, daß passend zu den Proben-Bereichen B2 im zweiten Zustand 6 liegt, da nur diese Bereiche zurückgesetzt werden müssen.

Das Laserscanningmikroskop gemäß Fig. 13 realisiert also die Verfahrensform gemäß Fig. 8a. Die Tiefe der Minima 45 kann durch die Güte des Gitters bzw. die individuelle Abschwächung der einzelnen Ordnungen erfolgen.

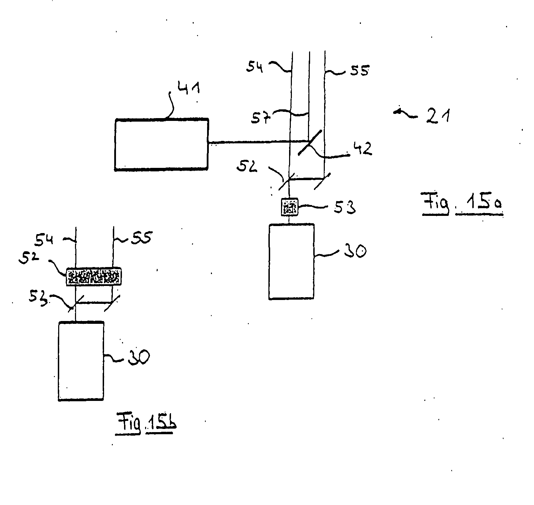

Fig. 15a zeigt eine Anordnung zur Realisierung der Verfahrensform gemäß Fig. 8b, wobei vom Laserscanningmikroskop 20 hier nur das Anregungsmodul 21 gezeigt ist, da das Mikroskopmodul 22 ansonsten den bereits geschilderten Aufbau hat. Aus der Lichtquelle 30 werden mittels eines ersten Strahlteilers 53 zwei Teilstrahlen erzeugt, hier senkrecht zur Zeichenebene beabstandet. Ein zweiter Strahlteiler 52 erzeugt insgesamt vier parallel laufende Teilstrahlen. Fig. 15b zeigt die Anordnung in einem um 90° Grad gedrehten Schnitt. Insgesamt liegen vier Teilstrahlen 54, 55 gleicher Intensität (gezeichnet sind die Mittelstrahlen) vor. In der Zeichnung nehmen jeweils zwei Teilstrahlen den gleichen Weg, so daß sie verdeckt sind.

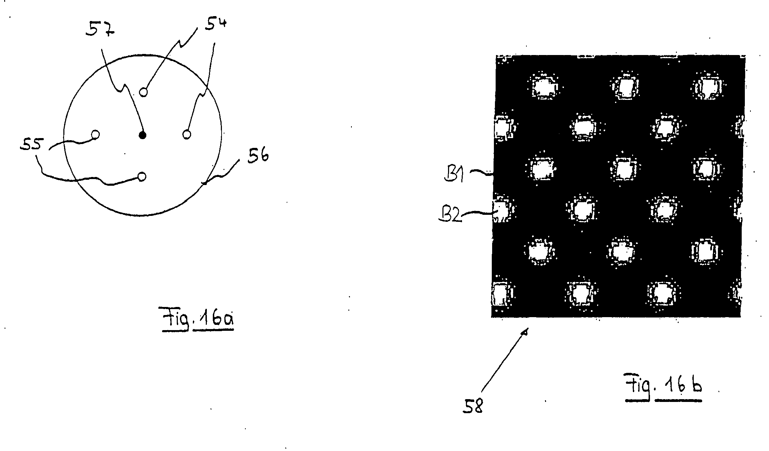

Die Teilstrahlen werden durch Linsen in eine Pupille des Mikroskopmoduls 22 fokussiert, so daß sich innerhalb einer Berandung 56 der Pupille die in Fig. 16a dargestellte Punktverteilung ergibt. Die vier Teilstrahlen 55, 54 nehmen die Ecken eines Quadrates ein. In der Probe 24 gelangen die Teilstrahlen zur Interferenz, wodurch senkrecht zur optischen Achse ein Multispotmuster 58 gemäß Fig. 16b auf der Probe 24 entsteht. Die Tiefe der Nullstellen dieses Multispotmusters 58 kann beispielsweise durch die Änderung der Intensitäten der jeweils diagonal gegenüberliegenden Strahlen 54, 55 variiert werden. Hierzu sind geeignete einstellbare Abschwächer (nicht gezeigt) für die Teilstrahlen vorgesehen.

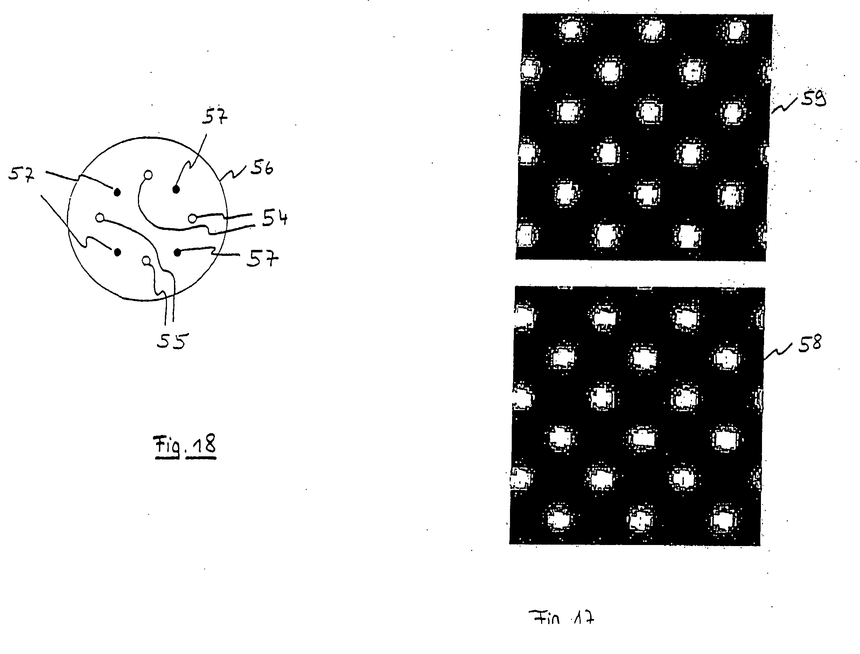

An den Stellen hoher Intensität (helle Bereiche B2) im Multispotmuster 58 der Fig. 16b gelangt die Probe 24 in den zweiten Zustand 6. Fluoreszenzstrahlung F entsteht in den Bereichen B1 geringer Intensität (dunkle Bereiche). Die Fluoreszenzstrahlung F wird dann wie üblich am Hauptfarbteiler 29 abgeteilt. Der Detektor 34 ist ein auf das Spotmuster angepaßter Matrixdetektor, optional mit vorgeschalteter Pinholemaske. Die Detektorelemente sind auf die Bereiche B1 ausgerichtet. Der Scanner 28 ermöglicht wiederum die Verschiebung der Anregungsstrahlungsverteilung über die Probe 24 in x- und/oder y-Richtung. Fig. 17 zeigt im unteren Bild das Multispotmuster 58 und darüber das damit angeregte Fluoreszenzmuster 59.

Von der Rücksetzlichtquelle 41 kann ein weiterer Strahl 57 in die Pupille fokussiert werden, der damit eine homogene Fläche in der Probe 24 ausleuchtet. Dadurch erfolgt ein Rückschalten der Fluoreszenzmoleküle aus dem zweiten Zustand 6 in den ersten Zustand 5, wie bereits erläutert zwischen zwei Scanschritten und gegebenenfalls auch innerhalb eines Schanschrittes.

Der Rücksetzstrahl 57 kann aber auch ein Beleuchtungsmuster aufweisen, das den Bereichen B2 entspricht, da nur diese rückgesetzt werden müssen. Hierzu wird der Strahl 47 analog zu den Teilstrahlen 54, 55 ebenfalls in vier Teilstrahlen zerlegt und in die Pupille abgebildet, so daß sich innerhalb der Berandung 56 der Pupille beispielsweise die in Fig. 18 gezeigte Verteilung ergibt. Zusätzlich ist die optische Achse der Teilstrahlen 57 der Rücksetzstrahlung R gegenüber der optischen Achse der Anregungsstrahlung A derart verkippt, daß die in der Probe entstehenden Minima des Multispotmuster 58 der Anregungsstrahlung A mit den Maxima des Multispotrücksetzmusters zusammenfallen Die Anordnung gemäß Figur 15a in der Variante von Fig. 18 ist ein exemplarisches Beispiel dafür, daß durch geeignete Strukturierung der Rücksetzstrahlung eine proben- bzw. farbstoffschonende Rücksetzung nur in den Bereichen B2 erfolgt.

Es kommt darauf an, daß die Probe durch geeignete Einstrahlung von Anregungsstrahlung A in Bereiche B1 im ersten Zustand und in Bereiche B2 im zweiten Zustand aufgeteilt wird. Die Überführung von Proben-Bereichen in den zweiten Zustand kann deshalb auch durch zur Auswahl einer Tiefenebene der Probe (vgl. Fig. 14) eingesetzt werden, so daß Proben-Bereiche B1 nicht zu einem Übersprechen benachbarter Detektorelemente/-regionen beitragen können.

Für das vorstehend in verschiedenen Varianten geschilderte Verfahren bzw. Mikroskop ist die Einstellung der Leistung der Anregungsstrahlung A abhängig von der Fluoreszenzcharakteristik der Probe unter besonderer Berücksichtigung der örtlichen Verteilung der Anregungsstrahlung A von Bedeutung. Insbesondere bestimmt die Tiefe eines oder mehrer Minima 45 und die Höhe der entsprechenden Maxima der Anregungsstrahlung der Verteilung die erreichbare Auflösungssteigerung. Ein Optimierung der Einstellung der örtlichen Leistungsverteilung der Anregungsstrahlung A kann auf zwei Wegen realisiert werden: Bei Kenntnis der Kennlinie 17, die dazu beispielsweise dem Steuergerät 35 entsprechend zur Verfügung gestellt ist/wird, wird für eine gegebene örtliche Anregungsverteilung der optimale Leistungspegel errechnet und entsprechend eingestellt, beispielsweise durch Ausgabe eines Sollwertes oder sogar direkte Ansteuerung des Anregungsmoduls 21.

Alternativ oder zusätzlich kann an einem Testpräparat oder einer Referenzstelle der zu untersuchenden Probe die tatsächliche Auflösung ermittelt und der optimale Leistungspegel bei gebender Anregungsverteilung in einem interativen Prozeß ermittelt und dann zur Abbildung der Probe 24 verwendet werden.

Anstelle einer reinen Leistungsskalierung kann natürlich auch die Verteilung verändert werden, beispielsweise durch entsprechende Einstellung des Phasenelements 39.

Die Fluoreszenzcharakteristik der Probe 24, beispielsweise die Fluoreszenzcharakteristik eines Farbstoffs, kann durch Untersuchung an einem Testpräparat oder einer Referenzstelle der Probe bereits unter späteren Bildgewinnungsbedingungen ermittelt werden. Dazu wird die Leistung der detektierten Fluoreszenzstrahlung F als Funktion der Leistung der Anregungsstrahlung A an einen Punkt oder einem Gebiet der Probe ermittelt. Für eine besonders gute Einstellung ist es günstig, wenn die Fluoreszenzcharakteristik, d.h. die Kennlinie 17 nicht von der Konzentration des fluoreszierenden Materials, beispielsweise des Farbstoffs abhängt (im Gegensatz zur emittierten Leistung der Fluoreszenzstrahlung F). Das Steuergerät 35 des Scanningmikroskops 20 kann dazu aus der ermittelten Kurve 17 oder einer zugeführten bzw. in einem Speicher abgelegten Kurve 17 automatisch die optimale Leistung ermitteln und entsprechend einstellen.

Die iterative Bestimmung ist immer dann vorteilhaft, wenn die Fluoreszenzeigenschaften stark probenabhängig sind und eine Referenzstelle an der Probe für die Ermittlung der Fluoreszenzcharakteristik vorhanden ist oder nicht gefunden werden kann. In diesem Fall kann man entweder an einem begrenzten Gebiet innerhalb oder außerhalb des interessierenden Probenfeldes oder anhand einer Bildgebung im gesamten abzubildenden Probenfeld eine Leistungsoptimierung vornehmen bzw. durch das Steuergerät 35 ausführen lassen. Anhand eines Gütekriteriums der Auflösung (z.B. der Kontrast in einer ausgewählten Stelle oder die Ausdehnung des im Bild übertragenen Frequenzbereichs im Fourierraum) wird die Anregungsleistung optimiert. Dabei ist es im allgemeinen ausreichend, die Leistung im Minimum der Anregungsverteilung bzw. eine räumlich breit verteilte Untergrundleistung anzupassen.

Die Anregungsstrahlung A und die Rücksetzungsstrahlung R können aus einer einzigen Strahlungsquelle erzeugt werden. Die Strahlungsquelle kann entweder direkt umschaltbar oder mit einer nachgeordneten Selektionsanordnung versehen sein.

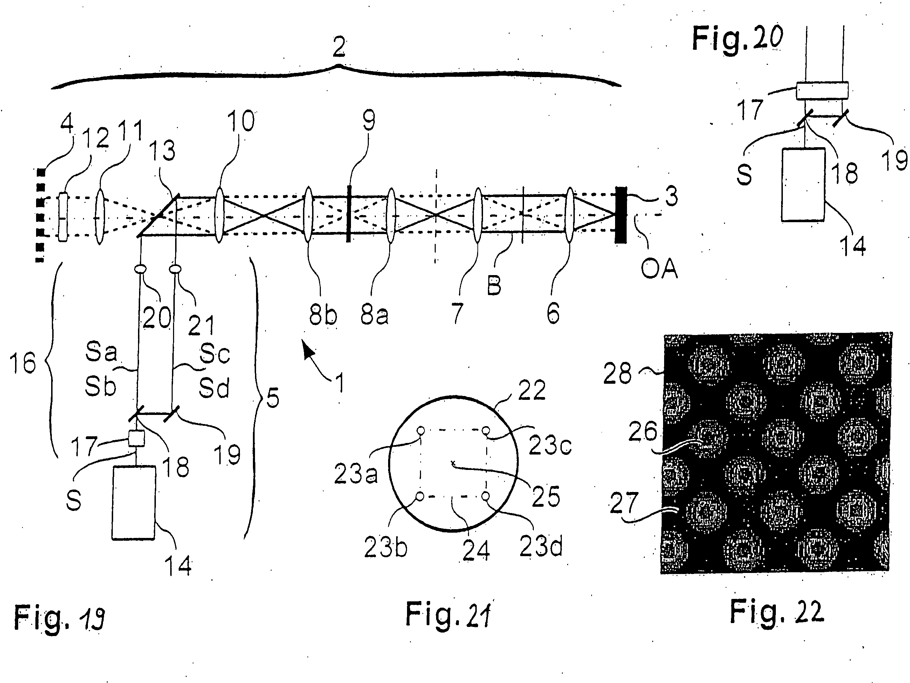

Figur 19 zeigt ein Laser-Scanning-Mikroskop 1 in schematischer Darstellung, das auch unabhängig vom bisher beschriebenen Konzept verwendet werden kann. Die durchgezogenen Linien stellen den Beleuchtungsstrahlengang B dar; die gestrichelte Linien den Detektionsstrahlengang 2. Das Laser-Scanning-Mikroskop bildet eine Probe 3 rasternd auf einen Detektor 4 ab, wobei die Probe mittels einer Beleuchtungsquelle 5 beleuchtet wird.

Der Detektionsstrahlengang 2 weist von der Probe 3 zum Detektor 4 längs einer optischen Achse OA ein Objektiv 6 sowie eine Tubuslinse 7 auf, der ein Scanobjektiv 8a folgt, nach der ein Scanner 9 vorgesehen ist. Nach einer Relaisoptik 8b, 10 sowie einer Pinholeoptik 11 passiert die Strahlung einen Strahlteiler 13 und gelangt zu einem Detektor 4, der hier als Matrixdetektor ausgebildet ist, und dem ein Filter 12 zum Abblocken letzter Anteile der Beleuchtungsstrahlung vorgeordnet ist. Natürlich kann der Detektionsstrahlengang 2 auch anders ausgestaltet sein, beispielsweise kann man auf den Filter 12 sowie auf das in der Bauweise der Figur 20 zwischen den Elementen 8a und 7 vorgesehene Zwischenbild, das durch eine gestrichelte Linie symbolisiert ist, verzichten.

Im in Figur 19 gezeigten Mikroskop 1 sind die Pupillenebenen, in denen der Scanner 9 sowie der noch zu erläuternde Strahlteiler 13 liegen, zueinander und zur rückwärtigen Brennebene des Objektives 6, die zwischen den Elementen 6 und 7 als durchgezogene Linie eingezeichnet ist, konjugiert.

Die Beleuchtungsquelle 5 weist einen Laser 14 auf, der durch eine Teilereinrichtung 16, die noch näher erläutert wird, vier Teilstrahlen Sa, Sb, Sc, Sd erzeugt, wobei in Figur 19 nur die Mittelstrahlen eingezeichnet sind. Die Teilereinrichtung 16 fokussiert diese vier Teilstrahlen Sa-d, von denen in der schematischen Darstellung der Figur 19 nur zwei zu sehen sind (die anderen zwei liegen senkrecht zur Zeichenebene übereinander) auf den Strahlteiler 13.

Im einzelnen weist die Teilereinrichtung 16 zwei Teiler 17 und 18 und einen Umlenkspiegel 19 auf, die aus dem einen vom Laser 14 abgegebenen Strahl S vier parallele Teilstrahlen Sa, Sb sowie Sc und Sd erzeugen. In der Darstellung der Figur 19 liegen die Teilstrahlen Sa und Sb übereinander, wie auch die Teilstrahlen Sc und Sd. Linsen 20 und 21 in der Teilereinrichtung 16 bewirken die Fokussierung derart, daß die Teilstrahlen Sa-c auf vier Punkte auf der Fläche des Strahlteilers 13 fokussiert werden.

Die Erzeugung der vier Teilstrahlen Sa-c kann natürlich auch durch eine andersartig ausgebildete Teilereinrichtung 16 oder grundsätzlich anders erfolgen, beispielsweise in dem vier Laser 14 verwendet werden. Eine mögliche weitere Ausgestaltung für die Teilereinrichtung 16 ist in Figur 20 gezeigt, in der der Teiler 18 und der Spiegel 19 mit dem Teiler 17 vertauscht sind.

Figur 21 zeigt den Strahlteiler 13 in Draufsicht auf dessen Strahlteilerfläche 22. Auf der Strahlteilerfläche 22 sind vier reflektierende Spiegelflächenelemente 23a, 23b, 23c und 23d angeordnet, die an den Eckpunkten eines gedachten Quadrates 24 liegen, dessen Zentrum der Durchstoßpunkt 25 der optischen Achse OA bildet. Nur dort ist die Strahlteilerfläche 25 reflektierend, im übrigen Bereich ist sie transmittierend zumindest für Detektionsstrahlung.

Die Beleuchtungsquelle 5 fokussiert die vier Teilstrahlen Sa-d auf die vier Spiegelflächenelemente 23a-d. In der Probe 3 gelangen die derart in die Pupille fokussiert und reflektierten Teilstrahlen zur Interferenz, wodurch das in Figur 22 dargestellte MultispotMuster 28 in der Probe entsteht. Das Multispot-Muster 28 ist eine regelmäßige Anordnung von Lichtflecken 26, die von einem Dunkelbereich 27 umgeben sind. Die Intensitätsdifferenz zwischen den Lichtflecken 26 und dem Dunkelbereich 27, also die Tiefe der Nullstellen, kann durch Änderung der Intensitäten der jeweils gegenüberliegenden Teilstrahlen Sa, Sd und Sb, Sc variiert werden. Dabei werden diagonal (bezogen auf die optische Achse) gegenüberliegende Teilstrahlen oder jeweils durch einen dazwischenliegenden Teilstrahl getrennte Teilstrahlen vorzugsweise gleichsinnig eingestellt. Bei drei Teilstrahlen wird einer gegenüber zwei verstellt (oder umgekehrt).

Die räumliche Ausdehnung des Musters 28 kann durch Variation des Vergrößerungsmaßstabes des Mikroskops (z.B. Variation der Brennweite bei 10 und 8b) angepaßt werden, indem das Bildfeld in der Probe, das das Muster 28 überdeckt, verändert wird. Alternativ kann die Brennweite der Linsen 10, 21 dazu eingestellt werden.

Die Wirkung des Strahlteilers 13 ist wie folgt:
Durch die geometrische Anordnung der Spiegelflächenelemente 23a-d und die darauf fokussierten Teilstrahlen Sa-d entsteht das Punkt-Muster 28 mit regelmäßig angeordneten Lichtflecken 26 auf der Probe 3. Bei einer Anwendung in der Fluoreszenzmikroskopie wird somit an den Lichtflecken 26 Fluoreszenz angeregt. Diese entsteht räumlich inkohärent und füllt somit homogen die rückwärtige Brennebene des Objektives 6 (zwischen den Elementen 6 und 7 als durchgezogene Linie eingezeichnet). Analoges gilt für diffuse Reflektion, die ebenfalls zur Bildgewinnung herangezogen werden kann.

Da die rückwärtige Brennebene mit der Pupille, in welcher der Strahlteiler 13 angeordnet ist, konjugiert ist, füllt die zu detektierende inkohärente Strahlung auch die gesamte Pupille, in der der Strahlteiler 13 angeordnet ist und leuchtet somit die gesamte Strahlteilerfläche 22 aus. Spiegelnd reflektierte Beleuchtungsstrahlung wird dagegen auf die Spiegelflächenelemente 23a-d fokussiert und somit zur Beleuchtungsquelle 5 zurückgeworfen.

Im Ergebnis passiert den Strahlteiler 13 nur die zu detektierende Strahlung, die räumlich inkohärent, d.h. ungerichtet in der Probe 3 entstand. Der Strahlteiler 13 bewirkt damit eine Trennung von Detektionsstrahlung und spiegelnd reflektierter Beleuchtungsstrahlung ohne daß eine chromatische Einstellung vorgenommen werden müßte. Dies hatte den Vorteil, daß nicht nur eine höhere Ausbeute erreicht wird, auch kann der Strahlteiler 13 für verschiedenste Beleuchtungswellenlängen und Detektionswellenlängen verwendet werden. Die üblicherweise bei Farbteilern vorgesehenen Austauschmechanismen bzw. Wechselräder sind nicht nötig.

Die Detektion (in Figur 19 ist der Pupillenstrahlengang gestrichelt gezeichnet) erfolgt beispielshalber mit dem als Matrixdetektor ausgebildeten Detektor 4, dem optional eine Pinholemaske vorgeordnet sein kann. Dabei werden die beleuchteten Spots konfokal abgebildet. Diese Maske kann in einer Zwischenbildebene des Beobachtungsstrahlenganges vor dem Detektor liegen oder alternativ in die Relaisoptik (zwischen 10 und 8b) gestellt werden. Letzteres verbessert das Strahlprofil auch beleuchtungsseitig.

Das Abtasten der Probe 3 erfolgt durch Wirkung des Scanners 9. Dabei ist eine sehr viel geringere Verschiebung der beleuchtenden Lichtflecke auf der Probe 3 nötig, als dies bei einem Einzelpunktscanner erforderlich ist. Die einzelnen Lichtflecke 26 werden vom Scanner 9 simultan verschoben, da sie durch Interferenz in der Probe entstehen. Es genügt deshalb eine Bewegung mittels des Scanners 109, die den Dunkelbereich 27 zwischen benachbarten Lichtflecken 26 abtastet. Die scannende Verschiebung der Lichtflecke erfolgt also vorzugsweise nur innerhalb einer Periodenlänge des periodischen regelmäßigen Musters 28.

Der in Figur 19 gezeigte Aufbau kann auch dahingehend invertiert werden, daß der Detektionsstrahlengang ab dem Strahlteiler 13 und die Beleuchtungsquelle 5 vertauscht werden. Der Strahlteiler 13 ist dann bezüglich der Verspiegelung negativ zu der in Figur 21 gezeigten Bauweise, d.h. die Spiegelflächenelemente 23a-d sind Löcher in einer Spiegelfläche.

Der Strahlteiler 13 kann auch mit einer Nipkow-Scheibe als Scanner kombiniert werden, bzw. als solche integriert werden.

## Patentansprüche

1. Laser-Scanning-Mikroskop mit einer Beleuchtungsstrahlquelle (5), einer Detektoreinrichtung (4) und einem Detektionsstrahlengang (2), der in einer Probe angeregte (3) und/oder rückgestreute Strahlung längs einer optischen Achse (OA) zur Detektoreinrichtung (4) leitet und in dem ein Strahlteiler (13) vorgesehen ist, über den von der Beleuchtungsstrahlquelle (5) abgegebene Beleuchtungsstrahlung in einem Beleuchtungsstrahlengang (B) auf die Probe (3) gerichtet ist, wobei der Strahlteiler (13) an der Probe (3) spiegelnd reflektierte Beleuchtungsstrahlung nicht zur Detektoreinrichtung (4) passieren läßt und dazu in einer Pupille des Beleuchtungsstrahlenganges (B) angeordnet sowie teilverspiegelt ist, wobei der Strahlteiler (13) eine im Detektionsstrahlengang (2) liegende Strahlteilerfläche (22) aufweist, die zumindest an drei Punkten (23a-d) für die Beleuchtungsstrahlung verspiegelt ist, welche auf der Strahlteilerfläche (22) auf einem Kreis um den Durchstoßpunkt (25) der optischen Achse (OA) liegen, und die Beleuchtungsstrahlquelle (5) eine der Punktzahl entsprechende Anzahl von Teilstrahlen (Sa-d) erzeugt und diese auf die zumindest drei Punkte (23a-d) des Strahlteilers (13) derart fokussiert, daß in der Probe (3) ein Interferenzmuster (28) in Form periodisch über die Probe (13) verteilter Beleuchtungsflecke (26) entsteht, und das Mikroskop Mittel zur Variation der Intensität jeweils bezogen auf die optische Achse diagonal gegenüberliegend fokussierter Teilstrahlen (Sa, Sc; Sb, Sd) oder jeweils durch einen dazwischenliegenden Teilstrahl getrennter Teilstrahlen aufweist.

2. Laser-Scanning-Mikroskop mit einer Beleuchtungsstrahlquelle (5), einer Deteletoreinrichtung (4) und einem Detektionsstrahlengang (2), der in einer Probe angeregte (3) und/oder rückgestreute Strahlung längs einer optischen Achse (OA) zur Detektoreinrichtung (4) leitet und in dem ein Strahlteiler (13) vorgesehen ist, über den von der Beleuchtungsstrahlquelle (5) abgegebene Beleuchtungsstrahlung in einem Beleuchtungsstrahlengang (B) auf die Probe (3) gerichtet ist, wobei der Strahlteiler (13) an der Probe (3) spiegelnd reflektierte Beleuchtungsstrahlung nicht zur Detektoreinrichtung (4) passieren läßt und dazu in einer Pupille des Beleuchtungsstrahlenganges (B) angeordnet sowie teilverspiegelt ist, wobei der Strahlteiler (13) eine im Detektionsstrahlengang (2) liegende reflektierende Strahlteilerfläche (22) aufweist, die zumindest an drei Punkten (23a-d) für die Beleuchtungsstrahlung nicht verspiegelt ist, welche auf der Strahlteilerfläche (22) auf einem Kreis um den Durchstoßpunkt (25) der optischen Achse (OA) liegen, und die Beleuchtungsstrahlquelle (5) eine der Punktzahl entsprechende Anzahl von Teilstrahlen (Sa-d) erzeugt und diese auf die zumindest drei Punkte (23a-d) des Strahlteilers (13) derart fokussiert, daß in der Probe (3) ein Interferenzmuster (28) in Form periodisch über die Probe (13) verteilter Beleuchtungsflecke (26) entsteht, und das Mikroskop Mittel zur Variation der Intensität jeweils bezogen auf die optische Achse diagonal gegenüberliegend fokussierter Teilstrahlen (Sa, Sc; Sb, Sd) oder jeweils durch einen dazwischenliegenden Teilstrahl getrennter Teilstrahlen aufweist.

3. Mikroskop nach Anspruch 1 oder 2, **dadurch gekennzeichnet, daß** die Beleuchtungsstrahlquelle (5) einen Laser (14), der einen Laserstrahl (S) abgibt, und eine Teilereinrichtung (16), die eine Optikeinrichtung (20, 21) umfaßt und den Laserstrahl (S) in die Teilstrahlen (Sa-d) aufteilt und mittels der Optikeinrichtung (20, 21) auf die Punkte (23a-d) fokussiert, aufweist.

4. Mikroskop nach einem der obigen Ansprüche, **gekennzeichnet durch** eine Scaneinrichtung (9), die in Beleuchtungsrichtung dem Strahlteiler (13) nachgeordnet ist und ein Abscannen **durch** Verschieben des Interferenzmusters (28) auf der Probe (3) bewirkt, wobei die Verschiebung innerhalb einer Periode der periodisch verteilten Beleuchtungsflecke (26) erfolgt.

5. Mikroskop nach einem der obigen Ansprüche, **dadurch gekennzeichnet, daß** die Detektoreinrichtung ein Matrixdetektor ist und der Detektionsstrahlengang im Matrixdetektor (4) endet.

6. Mikroskop nach einem der obigen Ansprüche, **gekennzeichnet durch** Mittel zur Brennweitenvariation (10, 8a, 8b) zwischen Strahlteiler (13) und Probe (3).

## Claims

1. Laser scanning microscope with an illumination beam source (5), a detector device (4) und a detection beam path (2), which guides radiation excited and/or back-scattered in a sample (3) along an optical axis (OA) to the detector device (4) and in which a beam splitter (13) is provided, via which the illumination radiation emitted by the illumination beam source (5) is directed in an illumination beam path (B) onto the sample (3), wherein the beam splitter (13) does not allow illumination radiation mirror-reflected at the sample (3) to pass to the detector device (4) and to this end is arranged in a pupil of the illumination path (B) and is also partly mirrored, wherein the beam splitter (13) has a beam splitter surface (22) lying in the detection beam path (2), which is mirrored at least at three points (23a-d) for the illumination radiation that lie on the beam splitter surface (22) on a circle around the trace point (25) of the optical axis (OA), and the illumination beam source (5) generates a number of partial beams (Sa-d) corresponding to the number of points and these are focussed on the at least three points (23a-d) of the beam splitter (13) so that in the sample (3) an interference pattern (28) is produced in the form of illumination spots (26) distributed periodically over the sample (3), and the microscope has means for varying the intensity respectively of partial beams (Sa, Sc; Sb, Sd) focussed diagonally oppositely in relation to the optical axis or respectively partial beams separated by an interposed partial beam.

2. Laser scanning microscope with an illumination beam source (5), a detector device (4) und a detection beam path (2), which guides radiation excited and/or back-scattered in a sample (3) along an optical axis (OA) to the detector device (4) and in which a beam splitter (13) is provided, via which the illumination radiation emitted by the illumination beam source (5) is directed in an illumination beam path (B) onto the sample (3), wherein the beam splitter (13) does not allow illumination radiation mirror-reflected at the sample (3) to pass to the detector device (4) and to this end is arranged in a pupil of the illumination path (B) and is also partly mirrored, wherein the beam splitter (13) has a beam splitter surface (22) lying in the detection beam path (2), which is not mirrored at least at three points (23a-d) for the illumination radiation that lie on the beam splitter surface (22) on a circle around the trace point (25) of the optical axis (OA), and the illumination beam source (5) generates a number of partial beams (Sa-d) corresponding to the number of points and these are focussed on the at least three points (23a-d) of the beam splitter (13) so that in the sample (3) an interference pattern (28) is produced in the form of illumination spots (26) distributed periodically over the sample (3), and the microscope has means for varying the intensity respectively of partial beams (Sa, Sc; Sb, Sd) focussed diagonally oppositely in relation to the optical axis or respectively partial beams separated by an interposed partial beam.

3. Microscope according to claim 1 or 2, **characterised in that** the illumination beam source (5) comprises a laser (14) that emits a laser beam (S), and a splitter (16) that includes an optical device (20, 21) and splits the laser beam (S) into the partial beams (Sa-d) and focusses them by means of the optical deviced (20, 21) onto the points (23a-d).

4. Microscope according to one of the preceding claims, **characterised by** a scanning device (9) that is subordinate to the beam splitter (13) in the illumination direction and performs a scanning by displacing the interference pattern (28) on the sample (3), wherein the displacement takes place within a period of the periodically split illumination spots (26).

5. Microscope according to one of the preceding claims, **characterised in that** the detector device is a matrix detector and the detection beam path ends in the matrix detector (4).

6. Microscope according to one of the preceding claims, **characterised by** means for varying the focal length (10, 8a, 8b) between the beam splitter (13) und sample (3).

## Revendications

1. Microscope à balayage laser, avec une source de rayons d'éclairage (5), un dispositif de détection (4) et une trajectoire de rayons de détection (2) qui guide, dans un échantillon, vers le dispositif de détection (4) le long d'un axe optique (OA) le rayonnement excité (3) et/ou rétrodiffusé et dans laquelle il est prévu un séparateur de faisceaux (13) est prévu, par le biais duquel le rayonnement d'éclairage délivré par la source de rayons d'éclairage (5) est dirigé sur l'échantillon (3) dans une trajectoire de rayons d'éclairage (B), le séparateur de faisceaux (13) ne laissant pas passer vers le dispositif de détection (4) le rayonnement d'éclairage réfléchi de façon spéculaire sur l'échantillon (3) et étant pour cela disposé dans une pupille de la trajectoire de rayons d'éclairage ainsi que de façon partiellement réfléchie, le séparateur de faisceaux (13) présentant une surface du séparateur de faisceaux (22) qui est située dans la trajectoire de rayons de détection (2) et qui est réfléchie au moins sur trois points (23a-d) pour le rayonnement d'éclairage qui sont situés sur la surface du séparateur de faisceaux (22) sur un cercle autour du point de percée (25) de l'axe optique (OA), et la source de rayons d'éclairage (5) produisant un nombre de rayons partiels (Sa-d) correspondant au nombre de points et focalisant ces rayons partiels sur les au moins trois points (23a-d) du séparateur de faisceaux (13) de telle sorte que, dans l'échantillon (3), il apparaît un motif d'interférences (28) sous forme de taches d'éclairage (26) réparties périodiquement sur l'échantillon (3), et le microscope présentant des moyens destinés à faire varier l'intensité respectivement de rayons partiels (Sa, Sc ; Sb, Sd) focalisés de façon diagonalement opposée par rapport à l'axe optique ou respectivement de rayons partiels séparés par un rayon séparateur intercalé.

2. Microscope à balayage laser avec une source de rayons d'éclairage (5), avec une source de rayons d'éclairage (5), un dispositif de détection (4) et une trajectoire de rayons de détection (2) qui guide, dans un échantillon, vers le dispositif de détection (4) le long d'un axe optique (OA) le rayonnement excité (3) et/ou rétrodiffusé et dans laquelle il est prévu un séparateur de faisceaux (13), par le biais duquel le rayonnement d'éclairage délivré par la source de rayons d'éclairage (5) est dirigé sur l'échantillon (3) dans une trajectoire de rayons d'éclairage (B), le séparateur de faisceaux (13) ne laissant pas passer vers le dispositif de détection (4) le rayonnement d'éclairage de façon spéculaire sur l'échantillon (3) et étant pour cela disposé dans une pupille de la trajectoire de rayons d'éclairage ainsi que de façon partiellement réfléchie, le séparateur de faisceaux (13) présentant une surface du séparateur de faisceaux (22) réfléchissante qui est située dans la trajectoire de rayons de détection (2) et qui n'est pas est réfléchie au moins sur trois points (23a-d) pour le rayonnement d'éclairage qui sont situés sur la surface du séparateur de faisceaux (22) sur un cercle autour du point de percée (25) de l'axe optique (OA), et la source de rayons d'éclairage (5) produisant un nombre de rayons partiels (Sa-d) correspondant au nombre de points et focalisant ces rayons partiels sur les au moins trois points (23ad) du séparateur de faisceaux (13) de telle sorte que, dans l'échantillon (3), il apparaît un motif d'interférences (28) sous forme de taches d'éclairage (26) réparties périodiquement sur l'échantillon (3), et le microscope présentant des moyens destinés à faire varier l'intensité respectivement de rayons partiels (Sa, Sc ; Sb, Sd) focalisés de façon diagonalement opposée par rapport à l'axe optique ou respectivement de rayons partiels séparés par un séparateur intercalé.

3. Microscope selon la revendication 1 ou 2, **caractérisé en ce que** la source de rayons d'éclairage (5) présente un laser (14) qui délivre un rayon laser (S), et un dispositif séparateur (16) qui comprend un dispositif optique (20, 21) et divise le rayon laser (S) en rayons partiels (Sa-d) et le focalise sur les points (23a-d) au moyen du dispositif optique (20, 21).

4. Microscope selon l'une des revendications précédentes, **caractérisé par** un dispositif de balayage (9) qui est placé en aval du séparateur de faisceaux (13) dans la direction d'éclairage et qui provoque un balayage par le déplacement du motif d'interférences (28) sur l'échantillon (3), le déplacement s'effectuant à l'intérieur d'une période des taches d'éclairage (26) réparties périodiquement.

5. Microscope selon l'une des revendications précédentes, **caractérisé en ce que** le dispositif de détection est un détecteur matriciel et **en ce que** la trajectoire des rayons de détection se termine dans le détecteur matriciel (4).

6. Microscope selon l'une des revendications précédentes, **caractérisé par** des moyens destinés à faire varier la focale (10, 8a, 8b) entre le séparateur de faisceaux (13) et l'échantillon (3).
